# EUROPÄISCHE PATENTSCHRIFT

(11) **EP 4 359 260 B1**
(45) Veröffentlichungstag und Bekanntmachung des Hinweises auf die Patenterteilung: **09.04.2025**
(21) Anmeldenummer: 22734520.4
(22) Anmeldetag: 03.06.2022
(51) Int. Cl.: B60R 1/22, B25J 5/00, B61L 23/00, G01M 17/007

(54) **VERFAHREN ZUM INSPIZIEREN EINES FAHRZEUGES UND INSPEKTIONS-SYSTEM**
METHOD FOR INSPECTING A VEHICLE, AND INSPECTION SYSTEM
PROCÉDÉ D'INSPECTION D'UN VÉHICULE ET SYSTÈME D'INSPECTION

(30) Priorität: 22.06.2021 DE 102021116068
(43) Veröffentlichungstag der Anmeldung: 01.05.2024
(73) Patentinhaber: ZF CV Systems Global GmbH, 3006 Bern (CH)
(72) Erfinder: Dieckmann, Thomas, 30982 Pattensen (DE); Ricke, Janik, 31311 Uetze (DE)
(74) Vertreter: Rabe, Dirk-Heinrich
(86) Internationale Anmeldenummer: PCT/EP2022/065177
(87) Internationale Veröffentlichungsnummer: WO 2022/268480

(56) Entgegenhaltungen:
- WO-A1-2019/026321
- US-B1- 10 497 108

## Beschreibung

Die Erfindung betrifft ein Verfahren zum Inspizieren eines Fahrzeuges auf einem Gelände mit einem Verwaltungssystem nach dem beiliegenden Anspruch 1, sowie ein Inspektions-System zur Durchführung des Verfahrens nach dem beiliegenden Anspruch 24.

Wie bei allen Fahrzeugen, insbesondere Nutzfahrzeugen, muss auch bei autonom betriebenen Fahrzeugen eine Abfahrtkontrolle erfolgen. Dabei wird eine Kontrollliste mit gewissen Funktionen des Fahrzeuges, die vor jeder Abfahrt auf korrekte Funktion zu kontrollieren sind, abgearbeitet aber auch kontrolliert, ob das Fahrzeug gefährdungsfrei losfahren kann, d.h. sich beispielsweise keine Personen oder Gegenstände mehr am bzw. unter dem Fahrzeug befinden. Da für diese Kontrolle bei autonomen Fahrzeugen ein Fahrer bzw. Kontrolleur nicht immer zur Verfügung steht, wird beispielsweise auf die vorhandene Fahrzeug-Umfeldsensorik des autonomen Fahrzeugs aber auch auf extern installierte Sensoren eines Kontrollgerätes zurückgegriffen, wie beispielsweise in DE 10 2020 007 456 A1 beschrieben. Darüber kann dann eine Kontrolle in entsprechender Weise stattfinden. Aber auch bei manuell betriebenen Fahrzeugen kann auf eine über die Fahrzeug-Umfeldsensorik stattfindende Abfahrtkontrolle zurückgegriffen werden.

Dabei gibt es jedoch Stellen, an denen eine Erfassung der Umgebung zur Kontrolle schwer möglich ist, z.B. unter dem Fahrzeug, beispielsweise bei einem langgezogenen Fahrzeug-Gespann. Zwar gibt es Vorschläge, Kameras bzw. Sensoren auch unter dem Fahrzeug anzubringen, wie beispielsweise in DE 10 2017 115 582 A1 und DE 10 2020 001 198 A1 beschrieben, jedoch müssen diese dann aufgrund der erhöhten Anfälligkeit für Verschmutzung sehr oft gereinigt werden. Außerdem ist es auch mit zwei Kameras nur schwer möglich, den kompletten Unterbereich des Fahrzeuges, beispielsweise eines Fahrzeug-Gespanns, zu erfassen, da diese beiden Kameras starr am Fahrzeugaufbau montiert sind.

Weiterhin sind stationäre Systeme bekannt, um den Zustand eines Fahrzeuges von unten zu ermitteln, wie beispielsweise in WO 06/059998 A1, US 2006170768 A1, US 2008211914 A1, US 2010238290 A1, US 2019304099A1 oder US 2019304100 A1 beschrieben. Der Fahrer fährt dazu mit seinem Fahrzeug beispielsweise über ein Sensorsystem. Die darin vorhandenen Sensoren nehmen hochaufgelöste Bilder des Unterbodens auf und bewerten mittels einer Software bzw. eines Algorithmus den Zustand beispielsweise des Unterbodens, des Auspuffs, der Traggelenke oder der Stoßdämpfer. Der Nachteil bei diesen Verfahren ist, dass das Fahrzeug bereits fahren muss bzw. musste, damit der Unterboden erfasst werden kann. Es muss aber im Rahmen der Abfahrkontrolle bereits vor der Fahrt festgestellt werden, ob sich etwas unter dem Fahrzeug befindet.

Im Stand der Technik sind weiterhin Verfahren bekannt, bei denen eine Inspektion eines Fahrzeuges durch eine Drohne erfolgen kann, wie beispielsweise in US 2019266715 A1 oder US 10825097 B beschrieben. Hierfür wird mittels einer fliegenden Drohne das Fahrzeug umflogen und Kratzer und Dellen festgestellt, wobei die Drohne auch unter das Fahrzeug fliegen oder fahren kann. Dabei ist eine Anwendung für eine Abfahrkontrolle nicht vorgesehen, sondern lediglich eine Inspektion der Reifen, des Unterbodens oder des Abgassystems. Weiterhin ist der Betrieb einer Drohne mit einem hohen Energieverbrauch verbunden, da diese dauerhaft in der Luft zu halten ist. Daher ist die Einsatzdauer einer solchen Drohne ohne Aufladung begrenzt. Die WO2019026321A1 offenbart ein Schienentransportsystem, das ein fahrerloses Transportfahrzeug, das Passagiere transportiert, ein Sicherheitsinspektionsfahrzeug, das vor dem Transportfahrzeug fährt, und ein Kommunikationsmittel zum Bereitstellen einer Verbindung umfasst, um ein Fahrterlaubnissignal zwischen dem Transportfahrzeug und dem Sicherheitsinspektionsfahrzeug zu kommunizieren, wobei das Transportfahrzeug mit einer Bremseinrichtung ausgestattet ist und die Bremseinrichtung betätigt wird, wenn das Transportfahrzeug bei Überschreiten einer Zeitüberschreitungsdauer das Fahrterlaubnissignal nicht empfängt. Da Hindernisse auf einem Gleis in Schienentransportsystemen, in denen ein fahrerloses Transportfahrzeug auf dem Gleis fährt, nicht durch Lenken umgangen werden können, ist die Hinderniserkennung ein Problem, das mit dem Sicherheitsinspektionsfahrzeug und dem Kommunikationsmittel gelöst werden kann, um die Sicherheit und Bedienbarkeit von Transportsystemen zu verbessern. Das Sicherheitsinspektionsfahrzeug weist einen Sensor zur Hinderniserkennung in Fahrtrichtung auf den Schienen auf. Sobald ein Hindernis erkannt wird, dann wird ein entsprechendes Haltesignal an das Transportfahrzeug gesendet, damit dieses bremsen kann. Ein weiteres autonomes Inspektionsgerät, das zum Stand der Technik gehört, ist in Dokument US10497108 B1 offenbart.

Aufgabe der Erfindung ist, ein Verfahren zum Inspizieren eines Fahrzeuges auf einem Gelände mit einem Verwaltungssystem anzugeben, das mit einfachen Mitteln und ohne eine Modifikation des zu kontrollierenden Fahrzeuges eine zuverlässige Aussage darüber ermöglicht, ob ein Fahrzeug an der Abfahrt gehindert ist oder nicht. Aufgabe ist weiterhin, ein entsprechendes Inspektions-System anzugeben.

Diese Aufgabe wird durch ein Verfahren sowie ein Inspektions-System gemäß den unabhängigen Ansprüchen gelöst. Die Unteransprüche geben bevorzugte Weiterbildungen an.

Erfindungsgemäß ist demnach ein Verfahren zum Inspizieren eines Fahrzeuges auf einem Gelände (z.B. Hafengelände, Parkplatz, Tankstelle, Betriebshof) mit einem Verwaltungssystem (Managementsystem) vorgesehen, vorzugsweise im Rahmen einer Abfahrtkontrolle, wobei das Verwaltungssystem ausgebildet ist, Fahrzeuge auf dem Gelände mittels mindestens einer Verwaltungs-Funktion zu koordinieren, d.h. zu steuern und/oder zu überwachen und/oder zu befehligen,
wobei das Verwaltungssystem ferner ausgebildet ist, ein Inspektionsfahrzeug zu steuern, vorzugsweise drahtlos, wobei das Inspektionsfahrzeug ein Sensorsystem mit mindestens einem Sensor aufweist zum Ausgeben von Sensor-Signalen in Abhängigkeit einer von dem mindestens einen Sensor erfassten Umgebung, mit mindestens den folgenden Schritten:
- Ermitteln, ob mindestens ein Fahrzeug auf dem Gelände eine Abfahrt von einem Abstellplatz beabsichtigt;
- Erzeugen mindestens eines Steuer-Befehls durch das Verwaltungssystem und Übertragen des mindestens einen Steuer-Befehls an das Inspektionsfahrzeug derartig, dass sich das Inspektionsfahrzeug entlang eines Inspektions-Pfades zu einer Abstellposition bzw. dem Abstellplatz des Fahrzeuges, das eine Abfahrt beabsichtigt, hin bewegt;
- Erfassen einer Umgebung um das Inspektionsfahrzeug am Abstellplatz des Fahrzeuges durch das Sensorsystem im Inspektionsfahrzeug während ein Erfassungsbereich des mindestens einen Sensors zumindest bereichsweise auf den Unterbereich unterhalb des Fahrzeuges und/oder auf das Fahrzeug ausgerichtet ist; und
- Ermitteln in Abhängigkeit der von dem Sensorsystem erzeugten Sensor-Signale, ob ein Hinderungs-Grund vorliegt, durch den die Abfahrt des Fahrzeuges behindert wird bzw. verhindert werden könnte zur Durchführung einer Abfahrtkontrolle.

Erfindungsgemäß ist auch eine Inspektions-Anordnung aus einem Verwaltungssystem und einem von dem Verwaltungssystem steuerbaren Inspektionsfahrzeug vorgesehen, wobei das Verwaltungssystem eine entsprechende Verwaltungs-Steuerung aufweist, so dass mit der Inspektions-Anordnung das erfindungsgemäße Verfahren ausgeführt werden kann.

Vorteilhafterweise wird also auf ein mobiles Inspektionsfahrzeug (vgl. fernsteuerbares Fahrzeug) zurückgegriffen, das durch eine geeignete Bewegung entlang des Inspektions-Pfades gezielt den gesamten oder zumindest den relevanten Teil des Unterbereiches unterhalb des Fahrzeuges, d.h. zwischen dem Untergrund und dem Fahrzeug, mit seinen Sensoren erfassen kann, um dann auch darauf schließen zu können, ob sich Personen und/oder Gegenstände unter dem Fahrzeug befinden, die eine sichere Abfahrt des Fahrzeuges beeinträchtigen können. Aber auch das Fahrzeug selbst kann über das mobile Inspektionsfahrzeug erfasst werden, um daraus abzuleiten, ob eine Funktionsbeeinträchtigung des Fahrzeuges vorliegt. Aus dem Zustand des Fahrzeuges, der eine sichere Abfahrt des Fahrzeuges beeinträchtigen würde, kann dann ebenfalls ein Hinderungs-Grund abgeleitet werden. Dabei wird ausgenutzt, dass sich das Fahrzeug auf einem Gelände mit einem Verwaltungssystem befindet, d.h. es finden bereits gewisse Verwaltungs-Funktionen statt, die durch den Betrieb des Inspektionsfahrzeuges in vorteilhafter Weise erweitert werden können.

Vorzugsweise wird also davon ausgegangen, dass das Inspektionsfahrzeug dem Gelände des Verwaltungssystems zugeordnet ist und/oder sich das Inspektionsfahrzeug nur auf dem Gelände des Verwaltungssystems bewegen kann. Das Inspektionsfahrzeug kann also in das Verwaltungssystem einfach zur Funktionserweiterung eingebunden werden und ist dabei auf den Betrieb auf dem jeweiligen Gelände auch abgestimmt. Vorzugsweise kann dabei eine aktuelle Position des Inspektionsfahrzeuges vom Verwaltungssystem beim Abfahren des Inspektions-Pfades durch ein Positionserfassungssystem am Inspektionsfahrzeug überwacht werden, so dass eine gezielte Abstimmung zwischen Inspektionsfahrzeug und dem Verwaltungssystem möglich ist.

Vorzugsweise ist weiterhin vorgesehen, dass die von dem Sensorsystem des Inspektionsfahrzeuges erzeugten und die Umgebung um das Inspektionsfahrzeug am Abstellplatz charakterisierenden Sensor-Signale an das Verwaltungssystem übertragen werden, vorzugsweise über ein drahtloses Kommunikationssystem, und in dem Verwaltungssystem in Abhängigkeit der von dem Sensorsystem erzeugten Sensor-Signale ermittelt wird, ob ein Hinderungs-Grund vorliegt, durch den die Abfahrt des Fahrzeuges behindert wird. Demnach kann also die Auswertung im Verwaltungssystem erfolgen, so dass auf dem Inspektionsfahrzeug selbst keine aufwendige Rechenleistung zur Verfügung zu stellen ist. Daher sind lediglich die Rohdaten oder zumindest vorverarbeitete Daten an das Verwaltungssystem zu übertragen, das dann den rechenaufwändigeren Teil der Auswertung übernimmt. Dabei kann insbesondere vorgesehen sein, dass das Ermitteln, ob ein Hinderungs-Grund vorliegt, durch den die Abfahrt des Fahrzeuges behindert wird, in dem Verwaltungssystem manuell, z.B. durch einen Teleoperator, oder automatisiert durch einen Erkennungs-Algorithmus bzw. durch Bildverarbeitung erfolgt, so dass bei einer manuellen Auswertung grundsätzlich auch im Verwaltungssystem Rechenaufwand gespart werden kann.

Vorzugsweise ist weiterhin vorgesehen, dass der Inspektions-Pfad durch das Verwaltungssystem vorab festgelegt wird und
- der Inspektions-Pfad als Steuer-Befehl auf das Inspektionsfahrzeug übertragen wird, oder
- Steuer-Befehle derartig an das Inspektionsfahrzeug übertragen werden, dass das Inspektionsfahrzeug den vorab festgelegten Inspektions-Pfad abfährt. Dadurch ist eine bessere Planbarkeit gegeben.

Vorzugsweise kann dabei ergänzend auch vorgesehen sein, dass der Inspektions-Pfad von dem Verwaltungssystem angepasst werden kann, insbesondere in Abhängigkeit der Sensor-Signale. Wird beispielsweise ein Hindernis erkannt oder ändert sich etwas bei der Planung und Koordination der Fahrzeuge auf dem Gelände, so kann das Verwaltungssystem den Inspektions-Pfad entsprechend anpassen, so dass sich die geplante Bewegung des Inspektionsfahrzeuges nachfolgend ändert.

Vorzugsweise kann weiterhin vorgesehen sein, dass der Inspektions-Pfad des Inspektionsfahrzeuges in Abhängigkeit davon festgelegt wird, ob ein oder mehrere Fahrzeuge auf dem Gelände eine Abfahrt von einem Abstellplatz beabsichtigen, so dass sich das Inspektionsfahrzeug entlang des Inspektions-Pfades nacheinander zu den Abstellpositionen bzw. Abstellplätzen aller Fahrzeuge, die eine Abfahrt beabsichtigen, hin bewegt, wobei der Inspektions-Pfad vorzugsweise auch in Abhängigkeit einer geplanten Abfahrtszeit des jeweiligen Fahrzeuges festgelegt wird. Dadurch kann Zeit gespart werden und es sind nicht für jeden geplanten Abfahrvorgang einzelne Inspektionsfahrzeuge nötig. Der Abfahrvorgang kann dadurch optimiert werden.

Vorzugsweise ist weiterhin vorgesehen, dass das Inspektionsfahrzeug eine Zentralsteuerung aufweist, die in Abhängigkeit des mindestens einen Steuer-Befehls ein Antriebssystem und/oder ein Lenksystem des Inspektionsfahrzeuges automatisiert ansteuert. Daher ist ein autonom betreibbares Inspektionsfahrzeug vorgesehen, das ohne Fahrer auskommt. Dabei kann ergänzend vorgesehen sein, dass die Zentralsteuerung das Antriebssystem und/oder das Lenksystem des Inspektionsfahrzeuges auch in Abhängigkeit der von dem Sensorsystem des Inspektionsfahrzeuges erzeugten Sensor-Signale ansteuert, insbesondere eine Inspektionsgeschwindigkeit des Inspektionsfahrzeuges und/oder den Inspektions-Pfad in Abhängigkeit der Sensor-Signale anpasst. Das Inspektionsfahrzeug kann also auch gezielt auf von den Sensoren erkannte Hindernisse oder Objekte in der Umgebung selbst reagieren, wenn die Zentralsteuerung einen entsprechenden Bildverarbeitungs-Algorithmus auch selbst installiert hat. Das Inspektionsfahrzeug kann dann auch autonom ausweichen bzw. auf erkannte Hindernisse reagieren.

Vorzugsweise kann dabei ergänzend vorgesehen sein, dass die Inspektionsgeschwindigkeit des Inspektionsfahrzeuges auf eine Maximalgeschwindigkeit begrenzt wird, wobei die Maximal-Geschwindigkeit beispielsweise 20km/h, vorzugsweise 17km/h, insbesondere 14km/h, beträgt und/oder vorzugsweise in Abhängigkeit der Umgebung festgelegt wird. Dadurch kann die Gefahr, die von dem Inspektionsfahrzeug auf dem Gelände ausgeht, minimiert werden, da bei derartig niedrigen Maximalgeschwindigkeiten rechtzeitig reagiert werden kann und selbst bei einem Zusammenstoß keine größeren Schäden auftreten.

Vorzugsweise ist weiterhin vorgesehen, dass das Inspektionsfahrzeug eine Beleuchtungseinrichtung an einer Rückseite und/oder an einer Vorderseite des Inspektionsfahrzeugs aufweist zum Beleuchten der Umgebung des Inspektionsfahrzeuges beispielsweise bei Dunkelheit, so dass auch dann eine zuverlässige Ermittlung von Personen und/oder Gegenständen im Unterbereich oder auch des Zustandes des Fahrzeuges möglich ist. Ferner ist zur Verbesserung des Erfassungsbereiches des Sensorsystems vorgesehen, dass der mindestens eine Sensor des Sensorsystems eine Fisheye-Kamera ist, beispielsweise mit einem Erfassungsbereich von 180° oder darüber, wobei vorzugsweise mindestens zwei Sensoren vorgesehen sind, die unterschiedliche, vorzugsweise gegensätzlich ausgerichtete, Erfassungsbereiche aufweisen, beispielsweise zur Vorderseite und zur Rückseite des Inspektionsfahrzeuges ausgerichtete Erfassungsbereiche. Dadurch kann ein ausreichend großer Bereich der Umgebung des Inspektionsfahrzeuges abgedeckt werden, so dass keine aufwändigen Bewegungspfade des Inspektionsfahrzeuges zur Erfassung des gesamten Unterbereiches des Fahrzeuges nötig sind. Um dabei den Unterbereich ausreichend erfassen zu können, vorzugsweise das zu inspizierende Fahrzeug unterfahren zu können, und/oder die Gefahr, die von dem Inspektionsfahrzeug ausgeht zu minimieren, ist weiterhin vorgesehen, dass eine Bauhöhe des Inspektionsfahrzeuges maximal 0,5m, insbesondere maximal 0,35m beträgt, und/oder eine Masse des Inspektionsfahrzeuges geringer als 10kg, vorzugsweise geringer als 5kg ist.

Vorzugsweise ist weiterhin vorgesehen, dass der mindestens eine Steuer-Befehl an das Inspektionsfahrzeug derartig erzeugt wird, dass das Inspektionsfahrzeug im Bereich der Abstellposition bzw. am Abstellplatz des Fahrzeuges, insbesondere im Unterbereich unterhalb des Fahrzeuges, einem nicht-linearen Kurs folgt, beispielsweise Schlangenlinien fährt, beispielsweise durch eine entsprechende Festlegung des Inspektions-Pfades. Dadurch kann sichergestellt werden, dass jeder Bereich des Unterbereiches, insbesondere auch hinter den Rädern, sowie auch des Fahrzeuges selbst von den Sensoren am Inspektionsfahrzeug erfasst werden kann.

Vorzugsweise ist weiterhin vorgesehen, dass der mindestens eine Steuer-Befehl an das Inspektionsfahrzeug derartig erzeugt wird, dass das Inspektionsfahrzeug in den Unterbereich unterhalb des Fahrzeuges ragt und/oder den Unterbereich unterhalb des Fahrzeuges komplett durchfährt, um den Erfassungsbereich des mindestens einen Sensors auf den Unterbereich unterhalb des Fahrzeuges auszurichten, wobei dies vorzugsweise derartig erfolgt, dass der gesamte Unterbereich unterhalb des Fahrzeuges von den Sensoren des Sensorsystems erfasst werden kann. Durch eine entsprechende Ausrichtung und Bewegungssteuerung des Inspektionsfahrzeuges kann also sichergestellt werden, dass der Unterbereich auch ausreichend erfasst wird, wobei das Inspektionsfahrzeug dazu aufgrund seiner Bauhöhe auch ausgebildet ist, in den Unterbereich selbst zu fahren.

Vorzugsweise ist weiterhin vorgesehen, dass neben dem Ermitteln einer Person im Unterbereich ein weiterer Hinderungs-Grund, durch den die Abfahrt des Fahrzeuges behindert wird, vorliegt, wenn anhand der von dem Sensorsystem des Inspektionsfahrzeuges erzeugten Sensor-Signale ermittelt wird, dass sich im Unterbereich unterhalb des Fahrzeuges mindestens ein Gegenstand befindet, der ausgewählt ist aus der Gruppe bestehend aus: Unterlegkeil unter den Rädern des Fahrzeuges, Stützen eines Anhängers des Fahrzeuges, eine Ladung, Nägel, Schrauben, Holzbretter, Paletten, Planen, Rungen. Derartige Gegenstände können eine sichere und zuverlässige Abfahrt des Fahrzeuges beeinträchtigen und können durch das Inspektionsfahrzeug bei entsprechender Steuerung einfach erfasst werden.

Vorzugsweise ist weiterhin vorgesehen, dass ein Hinderungs-Grund, durch den die Abfahrt des Fahrzeuges behindert wird, in Abhängigkeit mindestens eines Zustands ermittelt wird, der ausgewählt ist aus der Gruppe bestehend aus: Beleuchtungszustand, Radzustand, Türzustand, Planenzustand, Beladungszustand, Witterungszustand, Bremsanlagen-Zustand, Antriebszustand, wobei der jeweilige Zustand anhand der von dem Sensorsystem des Inspektionsfahrzeuges erzeugten Sensor-Signale ermittelt wird. Es kann also nicht nur der Unterbereich geprüft werden, sondern auch der Zustand bzw. Funktionsbeeinträchtigungen des jeweiligen Bauteils des Fahrzeuges selbst.

Dazu kann vorzugsweise weiterhin vorgesehen sein, dass der Zustand des Fahrzeuges, insbesondere der Bremsanlagen-Zustand und der Antriebszustand, über einen akustischen Sensor des Sensorsystems des Inspektionsfahrzeuges ermittelt wird durch Auswertung der in der Umgebung um das Inspektionsfahrzeug auftretenden Geräusche, die über den akustischen Sensor an dem Abstellplatz des Fahrzeuges erfasst werden. Durch eine akustische Überwachung können zusätzliche Informationen gewonnen werden, die sich mit einer rein optischen Überwachung durch die weiteren Sensoren des Sensorsystems nicht eindeutig herleiten lassen, beispielsweise kleine Löcher oder sonstige Undichtigkeiten in fluidführenden Pneumatikleitungen.

Vorzugsweise ist weiterhin vorgesehen, dass der mindestens eine Steuer-Befehl an das Inspektionsfahrzeug und/oder Steuer-Signale zur Koordination eines Fahrzeuges auf dem jeweiligen Gelände über ein drahtloses Kommunikationssystem, beispielsweise WLAN, LTE, 5G, LoraWan, etc., übertragen werden. Dadurch sind eine einfache Koordinierung und Steuerung des Inspektionsfahrzeuges sowie auch des Fahrzeuges im Rahmen der jeweiligen Verwaltungs-Funktion möglich. Vorzugsweise ist dabei weiterhin vorgesehen, dass das Verwaltungssystem und/oder das Inspektionsfahrzeug bei Vorliegen eines Hinderungs-Grundes, durch den die Abfahrt des Fahrzeuges behindert wird, Steuer-Signale derartig erzeugt und an das Fahrzeug ausgibt, dass das Fahrzeug an einer Abfahrt gehindert wird und/oder darauf hingewiesen wird, dass ein Hinderungs-Grund vorliegt, durch den die Abfahrt des Fahrzeuges behindert wird. Dabei wird ausgenutzt, dass das Verwaltungssystem in der Lage ist, über eine erste Verwaltungs-Funktion ein Fahrzeug auf dem jeweiligen Gelände gezielt zu koordinieren und ggf. auch aktiv in den Betrieb des Fahrzeuges einzugreifen, wobei dies unmittelbar vom Verwaltungssystem aus erfolgen kann oder mittelbar über das dem Verwaltungssystem zugeordnete Inspektionsfahrzeug. Wird also keine Freigabe erteilt, da eine Person und/oder ein Gegenstand im Unterbereich erkannt wurden oder der Zustand des Fahrzeuges dies nicht zulässt, so kann das Verwaltungssystem unmittelbar oder über das Inspektionsfahrzeug mittelbar entsprechend reagieren. Um dies zu erreichen, kann im Speziellen vorgesehen sein, dass aufgrund der Steuer-Signale bei Vorliegen eines Hinderungs-Grundes eine Parkbremse des Fahrzeuges eingelegt wird oder eingelegt bleibt und/oder das Fahrzeug ausgeschaltet wird.

Vorzugsweise ist weiterhin vorgesehen, dass sich das Inspektionsfahrzeug bei Nichtvorliegen eines Hinderungs-Grundes, d.h. wenn keine Person und/oder kein Gegenstand vom Inspektionsfahrzeug im Unterbereich erfasst wurden, in einen Freigabebereich auf dem Gelände bewegt, z.B. vor (in Start-Fahrtrichtung) das Fahrzeug, wobei das Fahrzeug dann mittels einer Fahrzeug-Umfeldsensorik erfassen kann, ob sich das Inspektionsfahrzeug in dem Freigabebereich befindet und dadurch selbst ermittelt, ob eine Abfahrt des Fahrzeuges vom Verwaltungssystem freigegeben ist, wobei in Abhängigkeit der vom Inspektionsfahrzeug erzeugten Sensor-Signale bis zu einer Abfahrt und/oder bei einer Abfahrt des Fahrzeuges vom Abstellplatz weiterhin das Vorliegen eines Hinderungs-Grundes geprüft wird. Dadurch kann dem Fahrzeug (oder dem Fahrer des Fahrzeuges) in einfacher Weise mitgeteilt werden, dass die Abfahrkontrolle positiv ausgefallen ist bzw. eine Abfahrt freigegeben ist, ohne dass eine weitere Rückmeldung vom Verwaltungssystem erfolgen muss. Das Inspektionsfahrzeug kann dann im Freigabebereich zumindest kurzzeitig bei der Abfahrt auch noch weiterhin den Unterbereich beobachten.

Vorzugsweise ist weiterhin vorgesehen, dass sich das Inspektionsfahrzeug bei Unterschreiten eines Grenzladezustandes eines Energiespeichers des Inspektionsfahrzeuges selbständig und oder vom Verwaltungssystem veranlasst in eine auf dem jeweiligen Gelände installierte Ladestation fährt. Dadurch kann automatisch ein Aufladen zum entsprechenden Zeitpunkt erfolgen.

Vorzugsweise ist weiterhin vorgesehen, dass in Abhängigkeit der Sensor-Signale des Sensorsystems des Inspektionsfahrzeuges eine Bauart der Fahrzeug-Bremsanlage des Fahrzeuges, insbesondere eines Anhängers des Fahrzeuges, ermittelt wird. Dadurch lassen sich zusätzliche Informationen, die zum sicheren Abfahren des Fahrzeuges hilfreich sein können, über das Inspektionsfahrzeug herausfinden, beispielsweise ob der im Abstellbereich neu angekuppelte Anhänger ein elektronisches Bremssystem aufweist. Das Zugfahrzeug kann dann bei der Abfahrt seinen Betrieb entsprechend darauf einstellen.

Die Erfindung wird im Folgenden anhand von Figuren näher erläutert. Es zeigen:
- Fig. 1: eine schematische Ansicht eines Fahrzeuges auf einem Gelände mit einem Verwaltungssystem;
- Fig. 2: eine schematische Ansicht eines Inspektionsfahrzeuges; und
- Fig. 3: ein Flussdiagramm des erfindungsgemäßen Verfahrens.

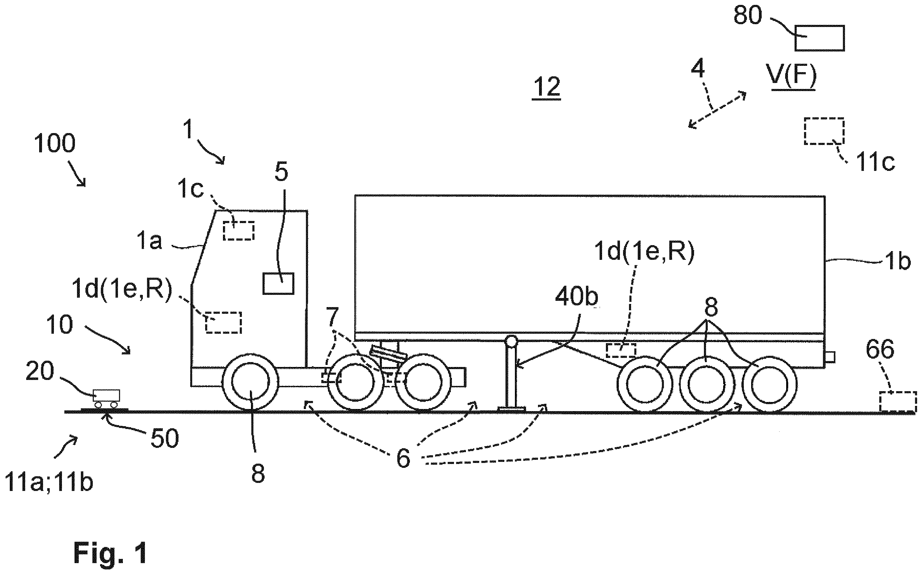

Figur 1 zeigt schematisiert ein Fahrzeug 1, das im gezeigten Ausführungsbeispiel aus einem Zugfahrzeug 1a und einem Anhänger 1b besteht. Das Fahrzeug 1 kann grundsätzlich auch einteilig sein und sowohl manuell als auch automatisiert betrieben sein. Das Fahrzeug 1 befindet sich im Stillstand auf einem Abstellplatz 10, beispielsweise auf einem Parkplatz, an einer Laderampe, an einer Tanksäule, etc.. Der Abstellplatz 10 kann sich dazu auf einem öffentlichen Gelände 11a, beispielsweise auf einem Rasthof oder einer Tankstelle, oder aber auf einem geschlossenen Gelände 11b, z.B. einem Hafengelände oder auf einem Betriebshof, befinden.

Der Abstellplatz 10 liegt in einem Einflussbereich 12 eines Verwaltungssystems V (Managementsystem), wobei das Verwaltungssystem V ausgebildet ist, die Aktivitäten von Fahrzeugen 1 innerhalb des Einflussbereiches 12 zu überwachen und auch zu koordinieren, wobei dazu gesteuert vom Verwaltungssystem V, insbesondere einer Verwaltungs-Steuerung 80, gewisse Verwaltungs-Funktionen F ausgeführt werden können. Die Überwachung und Koordination erfolgt dabei ggf. in Abstimmung mit einem Flottenbetreiber bzw. einen Flotten-Managementsystem, wobei das hier beschriebene Verwaltungssystem V auch in das Flotten-Managementsystem integriert bzw. Bestandteil dessen sein kann. Über das Verwaltungssystem V können beispielsweise die Ankunft, der Verbleib bzw. die Abfertigung und die Abfahrt A des Fahrzeuges 1 auf dem Gelände 11a, 11b zeitlich und örtlich geplant bzw. koordiniert werden. Das jeweilige Gelände 11a, 11b verfügt dabei vorzugsweise auch über eine Gelände-Umfeldsensorik 11c, mit der das Verwaltungssystem V das Gelände 11a, 11b insbesondere im Einflussbereich 12 mit unterschiedlichen Sensorarten, insbesondere einer Kamera, erfassen kann.

Das Verwaltungssystem V ist innerhalb des Einflussbereiches 12 in der Lage, mit einem Fahrzeug 1 zu kommunizieren, insbesondere über ein drahtloses Kommunikationssystem 4, beispielsweise WLAN, LTE, 5G, LoraWan, etc.. Dazu können sowohl Informationen betreffend das Fahrzeug 1 ausgetauscht werden als auch gewisse Steuerfunktionen des Fahrzeuges 1 übernommen werden, insbesondere dann, wenn das Fahrzeug 1 autonom oder teilautonom betrieben wird bzw. werden kann. So kann dem Fahrzeug 1 beispielsweise ein Pfad auf dem jeweiligen Gelände 11a, 11b vorgegeben werden, auf dem es sich zu einem Zielpunkt bewegen soll/darf, oder anderweitige Anweisungen in Hinblick auf die zu erfüllenden Aufgaben oder die Berechtigungen auf dem jeweiligen Gelände 11a, 11b. Das Verwaltungssystem V kann also den Betrieb des Fahrzeuges 1 in gewisser Weise gezielt beeinflussen, was eine erste Verwaltungs-Funktion F1 darstellt, wobei dies durch informative Vorgaben an einen Fahrer (falls vorhanden) und/oder aber durch einen aktiven Eingriff in eine Fahrzeug-Steuerung 5 erfolgen kann.

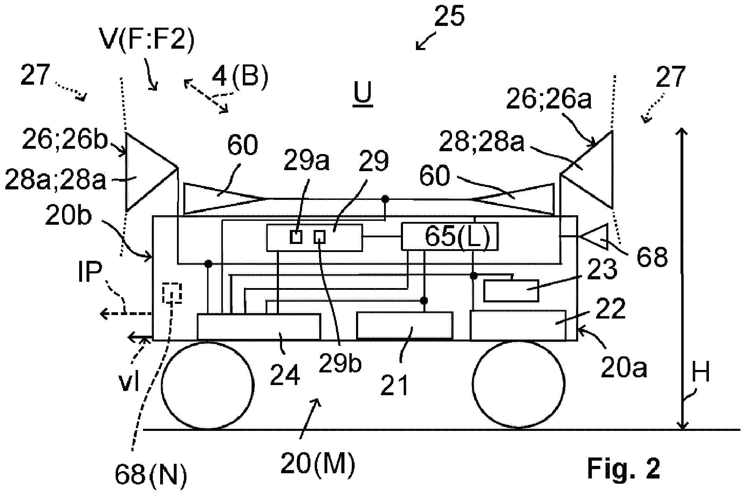

Eine zweite Verwaltungs-Funktion F2 des Verwaltungssystems V ist die Übernahme der Steuerung eines automatisiert gesteuerten bzw. steuerbaren Inspektionsfahrzeuges 20 mit einem Antriebssystem 21, einem Lenksystem 22 und ggf. auch einem Bremssystem 23, wie in Fig. 2 stark schematisiert dargestellt. Das Verwaltungssystem V kann dazu über das drahtlose Kommunikationssystem 4 Steuerbefehle B an eine Zentralsteuerung 24 des Inspektionsfahrzeuges 20 übermitteln, die dann von der Zentralsteuerung 24 des Inspektionsfahrzeuges 20 verarbeitet und an die entsprechenden Systeme 21, 22, 23 übertragen werden, so dass sich das Inspektionsfahrzeug 20 auf dem jeweiligen Gelände 11a, 11b entlang eines vorgegebenen Inspektions-Pfades IP bewegt. Vorzugsweise wird der Inspektions-Pfad IP dabei im Verwaltungssystem V festgelegt.

Dabei kann entweder der Inspektions-Pfad IP direkt als Steuerbefehl B an die Zentralsteuerung 24 des Inspektionsfahrzeuges 20 übermittelt werden, den das Inspektionsfahrzeug 20 dann autonom bzw. selbständig abfährt, oder die Steuerbefehle B beinhalten von dem Verwaltungssystem V (manuell oder automatisiert) vorgegebene Brems- und/oder Lenk- und/oder Antriebs-Anweisungen an die jeweiligen Systeme 21, 22, 23, aufgrund derer das Inspektionsfahrzeug 20 dem vorgegebenen Inspektions-Pfad IP folgt.

Das vom Verwaltungssystem V gesteuerte Inspektionsfahrzeug 20 dient dazu, gewisse Kontroll-Aufgaben zu übernehmen, insbesondere vor der Abfahrt A eines Fahrzeugs 1 vom Abstellplatz 10 sicherzustellen, dass sich keine Personen 30 und/oder Gegenstände 40 in einem Unterbereich 6 unterhalb des Fahrzeuges 1, d.h. des Zugfahrzeuges 1a oder des Anhängers 1b, befinden bzw. insgesamt zu kontrollieren, ob es Hinderungs-Gründe G gibt, die eine Abfahrt A des Fahrzeuges 1 verhindern bzw. behindern. Daher wird durch die zweite Verwaltungs-Funktion F2 des Verwaltungssystems V eine Überwachung bzw. ein Inspizieren eines Fahrzeuges 1 auf dem jeweiligen Gelände 11a, 11b ermöglicht, woraufhin das Verwaltungssystem V dann wiederum im Rahmen der ersten Verwaltungs-Funktion F1 den Betrieb des Fahrzeuges 1 beeinflussen kann. Beispielsweise kann vom Verwaltungssystem V verhindert werden, dass das Fahrzeug 1 seine Fahrt beginnt, wenn mithilfe des Inspektionsfahrzeuges 20 ein Hinderungs-Grund G festgestellt wurde.

Daher kann über die beiden beschriebenen Verwaltungs-Funktionen F1, F2 und ggf. weiterer Verwaltungs-Funktionen F eine Abfahrtkontrolle AK stattfinden, wobei bei Vorliegen eines Hinderungs-Grundes G die Abfahrt A des Fahrzeuges 1 durch Erzeugen und Übermitteln eines Steuer-Signals S1 an das Fahrzeug 1 durch die erste Verwaltungs-Funktion F1 des Verwaltungssystems V automatisch verhindert wird. Dabei wird das entsprechende Steuer-Signal S1 normalerweise direkt von der Verwaltungs-Steuerung 80 des Verwaltungssystems V über das drahtlose Kommunikationssystem 4 an das Fahrzeug 1 übertragen. Alternativ kann aber auch vorgesehen sein, dass das Steuer-Signal S1 von dem Inspektionsfahrzeug 20 aus in Koordination mit dem Verwaltungssystem V erzeugt und/oder an das Fahrzeug 1 über das drahtlose Kommunikationssystem 4 übermittelt wird.

Das Steuer-Signal S1 wird dabei von der Fahrzeug-Steuerung 5 des Fahrzeuges 1 entsprechend verarbeitet und daraufhin beispielsweise ein Einlegen einer Parkbremse 7 des Fahrzeuges 1 oder anderer Bremsmittel des Fahrzeuges 1 veranlasst, so dass das Fahrzeug 1 aktiv an einer Abfahrt A gehindert wird. Es sind aber im Rahmen der ersten Verwaltungs-Funktion F1 oder weiterer Verwaltungs-Funktionen F auch gleichwirkende Alternativen möglich, die das Fahrzeug 1 am Abfahren hindern können, wenn mithilfe des Inspektionsfahrzeuges 20 im Rahmen der zweiten Verwaltungs-Funktion F2 ein Hinderungs-Grund G festgestellt wurde, beispielsweise auch ein Ausschalten des Fahrzeuges 1.

Als Hinderungs-Grund G, der eine sichere Abfahrt A des Fahrzeuges 1 beeinträchtigt, kann neben einer Person 30, beispielsweise Kontrollpersonal, im Unterbereich 6 auch ein Gegenstand 40 im Unterbereich 6, beispielsweise Unterlegkeile 40a unter den Rädern 8 des Fahrzeuges 1, in Frage kommen, wobei mithilfe des Inspektionsfahrzeuges 20 geprüft werden kann, ob diese vor der Abfahrt A tatsächlich entfernt wurden. Weiterhin können als Gegenstände 40 über das Inspektionsfahrzeug 20 auch Stützen 40b des Anhängers 1b (insb. Aufliegers) erkannt werden, die beispielsweise noch nicht hochgefahren sind und daher in den Unterbereich 6 ragen und eine sichere Abfahrt A des Fahrzeuges 1 verhindern. Auch weitere im Unterbereich 6 liegende oder in diesen hineinragende Gegenstände 40 können einen Hinderungs-Grund G an einer Abfahrt A darstellen, beispielsweise Ladung 40c, Nägel 40d, Schrauben 40e, Holzbretter 40f, Paletten 40g, Planen 40h, Rungen 40i etc..

Ein weiterer Hinderungs-Grund G an einer sicheren Abfahrt A kann sich aber auch in Abhängigkeit eines Zustands Z des Fahrzeuges 1 ergeben, der ebenfalls über die Sensoren 26 des Sensorsystems 25 des Inspektionsfahrzeuges 20 festgellt werden kann, d.h. es wird die Funktionsfähigkeit oder eine Funktionsbeeinträchtigung des Fahrzeuges 1 über die Sensoren 26 am Inspektionsfahrzeug 20 beurteilt. Dazu kann über das Inspektionsfahrzeug 20 durch Auswertung der Sensor-Signale S2 beispielsweise ein Beleuchtungszustand Z1 einer Beleuchtungsanlage 1f des Fahrzeuges 1 geprüft werden. Das Verwaltungssystem V und/oder das Inspektionsfahrzeug 20 kann hierfür über den Fahrzeugzugriff (erste Verwaltungs-Funktion F1 bzw. Steuer-Signal S1) die Beleuchtungsanlage 1f des Fahrzeuges 1 entsprechend ansteuern und dadurch jede einzelne Beleuchtung (Blinker, Bremslicht, Abblendlicht, Rücklicht, etc.) durchschalten. Auch ein Radzustand Z2 der Räder 8 des Fahrzeuges 1 kann in Abhängigkeit der Sensor-Signale S2 geprüft werden, wenn das Inspektionsfahrzeug 20 entsprechend nah an diese herangefahren wird. Bei entsprechend unzureichendem Radzustand Z2, der beispielsweise auch bei fehlenden/demontierten Rädern 8 vorliegen kann, kann auf einen Hinderungs-Grund G geschlossen werden. Weiterhin kann ein Türzustand Z3 geprüft werden, d.h. eine (halb-)offene oder eine geschlossene Tür, oder ein Planenzustand Z4 (defekt, offen/geschlossen), oder ein Beladungszustand Z5 der Ladung des Fahrzeuges 1 oder ein Witterungszustand Z6, der angibt, ob sich beispielsweise übermäßig Schnee oder Wasser auf dem Fahrzeug 1 (bzw. um das Fahrzeug 1) befindet.

All diese Hinderungs-Gründe G, die sich aus einer Person 30 im Unterbereich 6 und/oder aus einem Gegenstand 40 im Unterbereich 6 und/oder aus einem Zustand Z des Fahrzeuges 1 ergeben, sollen erfindungsgemäß über das Inspektionsfahrzeug 20 festgestellt werden, das sich durch die vom Verwaltungssystem V vorgegebenen Steuerbefehle B auf einem bestimmten Inspektions-Pfad IP auf dem jeweiligen Gelände 11a, 11b bewegt, wobei der Inspektions-Pfad IP vorzugsweise derartig festgelegt ist, dass allgemein die Umgebung U im Bereich des Abstellplatzes 10, insbesondere das Fahrzeug 1 selbst, und dabei aber auch der gesamte Unterbereich 6 unterhalb des Fahrzeuges 1 abgebildet bzw. erfasst werden kann. Dazu ist das Inspektionsfahrzeug 20 mit einem Sensorsystem 25 versehen, das mindestens einen Sensor 26 mit einem Erfassungsbereich 27 aufweist, in dem er die Umgebung U um das Inspektionsfahrzeug 20 erfassen kann. Entsprechend können dann Sensor-Signale S2 vom Sensorsystem 25 erzeugt und/oder verarbeitet werden, die die Umgebung U im Erfassungsbereich 27 charakterisieren. Über das drahtlose Kommunikationssystem 4 können diese Sensor-Signale S2 als Rohdaten oder in (vor)verarbeiteter Form entsprechend an das Verwaltungssystem V zur weiteren Verarbeitung und/oder Auswertung übertragen werden.

Der mindestens eine Sensor 26 kann dazu beispielsweise eine Kamera 28, insbesondere eine Fisheye-Kamera 28a, sein, mit der eine Erfassung der Umgebung U in einem Erfassungsbereich 27 von bis zu 180° mit nur einem einzelnen Sensor 26 bzw. nur einer einzelnen Fisheye-Kamera 28a ermöglicht wird. Grundsätzlich können auch mehr als ein Sensor 26, insbesondere ein erster Sensor 26a z.B. an einer Rückseite 20a des Inspektionsfahrzeuges 20 und ein zweiter Sensor 26b z.B. an einer Vorderseite 20b des Inspektionsfahrzeuges 20 vorgesehen sein, die dann beide wiederum als Fisheye-Kameras 28a ausgeführt sein können. Beide Sensoren 26a, 26b sind dann unterschiedlich ausgerichtet, so dass über deren jeweilige Erfassungsbereiche 27 ein breiter Bereich der Umgebung U um das Inspektionsfahrzeug 20 abgedeckt werden kann. Durch Verarbeitung und/oder Auswertung der dementsprechend erzeugten Sensor-Signale S2 lässt sich daher ein umfassendes Abbild der Umgebung U überwachen bzw. kontrollieren.

Am Inspektionsfahrzeug 20 kann zur Kontrolle des Zustandes Z des Fahrzeuges 1 als weiterer Sensor 26 des Sensorsystems 25 auch ein akustischer Sensor 68, beispielsweise ein Mikrofon, installiert sein. Über die Auswertung der vom akustischen Sensor 68 erzeugten Sensor-Signale S2 können Geräusche N in der Umgebung U um das Inspektionsfahrzeug 20 erkannt werden und darüber, ob z.B. an der (pneumatischen) Fahrzeug-Bremsanlage 1d des Fahrzeuges 1 Luft entweicht, worüber ergänzend ein Bremsanlagen-Zustand Z7 geprüft werden kann. Außerdem können Motorgeräusche des Antriebssystems des Fahrzeuges 1 analysiert und festgestellt werden, ob diese normal sind, worüber auch ein Antriebszustand Z8 geprüft werden kann. Die Geräusche N können über die gesamte Länge des Fahrzeuges 1, d.h. am Zugfahrzeug 1a und auch an dem oder den Anhängern 1b, erkannt werden, um so zu lokalisieren, wo die Undichtigkeit oder ein Defekt auftritt.

Um mit diesem Sensorsystem 25 im Inspektionsfahrzeug 20 ein ausreichend großes bzw. ausreichend detailliertes Abbild des gesamten Unterbereiches 6 unterhalb des Fahrzeuges 1 erzeugen bzw. aufnehmen zu können, ist das Inspektionsfahrzeug 20 von seiner Bauhöhe H derartig dimensioniert, dass es unter dem zu inspizierenden Fahrzeug 1 durchfahren kann. Dadurch können bei entsprechender Wahl des Inspektions-Pfades IP alle Bereiche unter dem Fahrzeug 1, auch beispielsweise von den Rädern 8 abgedeckte Bereiche, die von der Seite des Fahrzeuges 1 unter Umständen nur schwer optisch zugänglich sind, über den mindestens einen Sensor 26 erfasst werden. Dadurch können weiterhin auch die Räder 8 an sich mit einer hohen Auflösung aus unterschiedlichen Richtungen erfasst werden, um im Rahmen der Abfahrtkontrolle AK beispielsweise auch den Radzustand Z2 der Räder 8 auswerten zu können. Auch die Aufnahme von Geräuschen N über den akustischen Sensor 68 wird dadurch auch von unterhalb des Fahrzeuges 1 ermöglicht.

Um dies zu erreichen, ist eine Bauhöhe H des Inspektionsfahrzeuges 20 von maximal 0,5m, vorzugsweise maximal 0,35m, vorgesehen, so dass das Inspektionsfahrzeug nicht an Unterbauteilen im Unterbereich 6 unterhalb des Fahrzeuges 1 hängen bleibt. Die Sensoren 26 sind entsprechend niedrig am Inspektionsfahrzeug 20 angebracht, damit diese keinen zusätzlichen Bauraum nach oben hin einnehmen. Zum positionsgetreuen Abfahren des Inspektions-Pfades IP können an dem Inspektionsfahrzeug 20 zusätzlich zu dem Sensorsystem 25 ein Positionserfassungssystem 29, beispielsweise mit einem GPS-Sensor 29a und/oder einem LIDAR-Sensor 29b, verbaut sein, wobei optional auch eine RTK-Vermessung (Real Time Kinematik, Echtzeitkinematik) vorgesehen sein kann, um die Genauigkeit zu erhöhen.

Um bei Dunkelheit ebenfalls ein Bild der Umgebung U aufzunehmen, wird eine Beleuchtungseinrichtung 60 an der Rück- und/oder der Vorderseite 20a, 20b des Inspektionsfahrzeugs 20 installiert. Die Beleuchtungseinrichtung 60 kann hierbei beispielsweise ein oder mehrere LEDs mit geringer Leistungsaufnahme aufweisen.

Da das Inspektionsfahrzeug 20 lediglich der Inspektion bzw. der Kontrolle der Umgebung U dient und daher nur wenige Bauteile aufweist, ist eine Masse M des Inspektionsfahrzeuges 20 von unter 5kg, vorzugsweise unter 3kg vorgehen, so dass es gefahrlos mit Inspektionsgeschwindigkeiten vl von bis zu 20 km/h betrieben werden kann und dabei aufgrund seiner geringen Größe auch sehr wendig ist. Das Abfahren des Inspektions-Pfades IP kann also sehr schnell und auf beliebigen Inspektions-Pfaden IP erfolgen, so dass eine Inspektion wenig aufwändig ist und auch sonst im Betrieb auf dem Gelände 11a, 11b eher weniger störend auftritt. Selbst wenn es trotz der Vorsichtsmaßnahmen zu einem Zusammenstoß zwischen dem Inspektionsfahrzeug 20 und einer Person 30 kommen sollte, geht aufgrund der geringen Masse M des Inspektionsfahrzeuges 20 keine oder eine geringere Gefahr von diesem aus. Dabei kann ergänzend auch vorgesehen sein, dass die Inspektionsgeschwindigkeit vl auf eine Maximalgeschwindigkeit vMax von 20km/h, vorzugsweise 17km/h, insbesondere 14km/h, begrenzt wird, wobei die Maximalgeschwindigkeit vMax auch in Abhängigkeit der jeweiligen Umgebung U bzw. des jeweiligen Geländes 11a, 11b festgelegt werden kann. Dadurch wird die vom Inspektionsfahrzeug 20 ausgehende Gefahr weiter verringert.

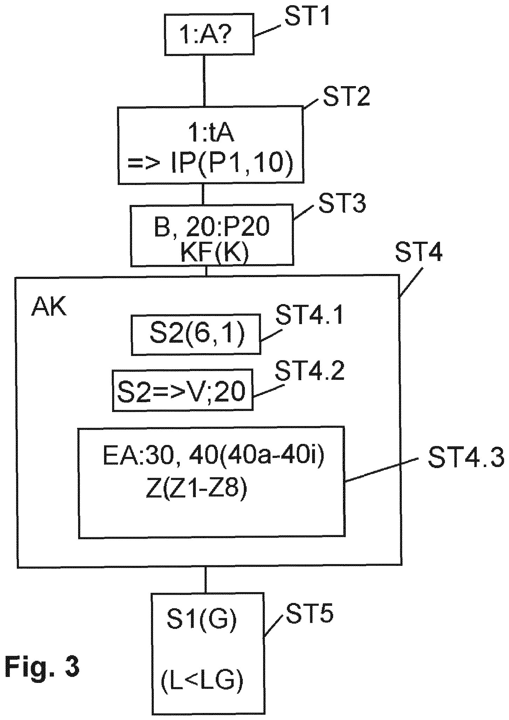

Mit diesem Inspektions-System 100 aus dem Verwaltungssystem V mit der Verwaltungs-Steuerung 80 und dem von diesem steuerbaren Inspektionsfahrzeug 20 kann der folgende, in Fig. 3 in einem Flussdiagramm beispielhaft dargestellte Verfahrensablauf zum Inspizieren des Fahrzeuges 1 im Rahmen einer Abfahrkontrolle AK durchgeführt werden:
In einem anfänglichen Schritt ST1 wird vom Verwaltungssystem V zunächst ermittelt, ob mindestens eines der Fahrzeuge 1 auf dem betreffenden Gelände 11a, 11b abfahrbereit ist und beabsichtigt, von dem Abstellplatz 10 abzufahren. Da das Verwaltungssystem V die Koordinierung auf dem jeweiligen Gelände 11a, 11b übernimmt, ist es entsprechend über jede beabsichtige Abfahrt A bzw. Abfahrbereitschaft auch informiert. Dabei wird davon ausgegangen, dass eine Fahrzeug-Umfeldsensorik 1c am betreffenden abfahrbereiten Fahrzeug 1 im abgestellten Zustand des Fahrzeuges 1 ggf. stromlos war und deshalb nicht vom Fahrzeug 1 selbst erfasst werden konnte, ob etwas unter das Fahrzeug 1 geraten ist oder sich noch eine inspizierende Person 30 oder ein anderer störender Gegenstand 40 unterhalb des Fahrzeuges 1 befindet oder ob ein die Abfahrt A des Fahrzeuges 1 behindernder Zustand Z des Fahrzeuges 1 vorliegt. Auf den betreffenden Geländen 11a, 11b kann ein solche Überwachung durch das Fahrzeug 1 bzw. deren Fahrzeug-Umfeldsensorik 1c selbst also nicht sichergestellt werden, da die Fahrzeuge 1 unter Umständen länger abgestellt und dazu ausgeschaltet werden, so dass auch die Fahrzeug-Umfeldsensorik 1c selbst nicht mehr dauerhaft aktiv sein kann.

In einem zweiten Schritt ST2 wird vom Verwaltungssystem V in Abhängigkeit einer Abstellposition P1 des Fahrzeuges 1 mit der Absicht zur Abfahrt A ein Inspektions-Pfad IP ermittelt, wobei dem Verwaltungssystem V die Abstellposition P1 des Fahrzeuges 1 bekannt ist, beispielsweise aus drahtlos übermittelten Informationen vom Fahrzeug 1 selbst und/oder über die auf dem Gelände 11a, 11b installierten Gelände-Umfeldsensorik 11c. Bei der Ermittlung des Inspektions-Pfades IP des Inspektionsfahrzeuges 20 kann auch berücksichtigt werden, ob für mehrere Fahrzeuge 1 auf dem jeweiligen Gelände 11a, 11b eine Absicht zur Abfahrt A vorliegt, so dass über den Inspektions-Pfad IP auch mehrere abfahrbereite Fahrzeuge 1 mit nur einem Inspektionsfahrzeug 20 überwacht bzw. inspiziert werden können. Dabei kann bei der Festlegung des Inspektions-Pfades IP auch eine Priorisierung eines der Fahrzeuge 1 in Abhängigkeit einer geplanten Abfahrtszeit tA des jeweiligen Fahrzeuges 1 eine Rolle spielen.

In einem dritten Schritt ST3 wird durch die Ausgabe des oder der entsprechenden Steuerbefehle B durch das Verwaltungssystem V an das Inspektionsfahrzeug 20 eine Bewegung des Inspektionsfahrzeuges 20 eingeleitet, das daraufhin den Inspektions-Pfad IP entlangfährt und dadurch zum jeweiligen abfahrbereiten Fahrzeug 1 gesteuert wird. Über das Positionserfassungssystem 29 kann das Verwaltungssystem V eine aktuelle Position P20 des Inspektionsfahrzeugs 20 genau ermitteln bzw. überwachen und die automatisierte Fahrt daher kontrollieren, so dass eine präzise Steuerung des Inspektionsfahrzeuges 20 ermöglicht wird, ggf. unter zusätzlicher Verwendung einer RTK-Vermessung, falls verfügbar.

Optional können mithilfe des oder der Sensoren 26 des Sensorsystems 25 des Inspektionsfahrzeuges 20, insbesondere mithilfe der Kameras 28 mittels Bildverarbeitungs-Algorithmen, grundlegende Informationen der Umgebung U um das Inspektionsfahrzeug 20 erfasst werden, um Hindernissen, die dem Verwaltungssystem V nicht bekannt und/oder über die Gelände-Umfeldsensorik 11c nicht erfassbar sind, ausweichen zu können und/oder eine Reduzierung der Inspektionsgeschwindigkeit vl des Inspektionsfahrzeuges 20 zu veranlassen, wenn sich unbekannte bewegende Objekte bzw. unbekannte Hindernisse in der Umgebung U erkannt werden. Die Zentralsteuerung 24 erhält dazu entweder entsprechende Steuerbefehle B vom Verwaltungssystem V, z.B. zum Anpassen des Inspektions-Pfades IP oder für eine temporäre Abweichung vom vorgegebenen Inspektions-Pfad IP, oder veranlasst eine Korrektur des Inspektions-Pfades IP anhand der Sensor-Signale S2 von selbst.

Dabei kann ergänzend eine Kartierungsfunktion KF während des Abfahrens des Inspektions-Pfades IP durchgeführt werden, bei der die vom Inspektionsfahrzeug 20 erzeugten und ausgegebenen Sensor-Signale S2 sowie die aktuelle Position P20 des Inspektionsfahrzeuges 20, die über das Positionserfassungssystem 29 ermittelt wird, beispielsweise auf der Verwaltungs-Steuerung 80 ausgewertet werden. Darüber können abgespeicherte Kartendaten K, auf die das Verwaltungssystem V zur Koordination der Fahrzeuge 1 sowie auch zur Steuerung des Inspektionsfahrzeuges 20 auf dem jeweiligen Gelände 11a, 11b zurückgreift, validiert werden und diese, falls nötig, auch angepasst werden. So können die Kartendaten K auf einem aktuellen Stand gehalten werden, wenn beispielsweise das jeweilige Gelände 11a, 11b mit der Gelände-Umfeldsensorik 11c nicht vollständig überblickt werden kann. Mithilfe der Sensor-Signale S2 vom Inspektionsfahrzeug 20 sowie der aktuellen Position P20 des Inspektionsfahrzeuges 20 können also Informations-Lücken gefüllt bzw. Veränderungen in der Umgebung U bzw. auf dem jeweiligen Gelände 11a, 11b erkannt werden.

Ist das Inspektionsfahrzeug 20 am jeweiligen abfahrbereiten Fahrzeug 1 angekommen, wird in einem vierten Schritt ST4 eine Abfahrtkontrolle AK durchgeführt, indem insbesondere der Unterbereich 6 unterhalb des jeweiligen Fahrzeuges 1 auf Personen 30 und/oder Gegenstände 40 abgescannt wird. Hierbei wird das zu kontrollierende, abfahrbereite Fahrzeug 1 vom Inspektionsfahrzeug 20 auch (zumindest teilweise) unterfahren und dabei in einem ersten Teilschritt ST4.1 entsprechende Sensor-Signale S2 erzeugt, die den Unterbereich 6 unterhalb des Fahrzeuges 1 charakterisieren. Der Inspektions-Pfad IP wird dazu vorzugsweise derartig festgelegt, dass das Inspektionsfahrzeug 20 einen nicht-linearen Kurs, beispielsweise leichte Schlangenlinien S, im Unterbereich 6 unterhalb des Fahrzeuges 1 fährt, um mittels des mindestens einen Sensors 26 auch die Bereiche zwischen den Rädern 8 an den Fahrzeugachsen des Fahrzeuges 1 sicher aufnehmen zu können. Die Schlangenlinien S bzw. der nicht-lineare Kurs begünstigen vor allem die Ausführung des Sensorsystems 25 mit nur einem Sensor 26, insbesondere nur einer Kamera 28 (Fisheye-Kamera 28a), da sich durch den nicht-linearen Kurs bzw. die Schlangenlinien S der über die Zeit erfasste Bereich unter dem Fahrzeug 1 vergrößert, unabhängig von der tatsächlichen Größe des Erfassungsbereiches 27 des jeweiligen Sensors 26.

Im Rahmen der Abfahrtkontrolle AK bewegt sich das Inspektionsfahrzeug 20 am Abstellplatz 10 des jeweiligen Fahrzeuges 1 aber nicht nur derartig, dass der Unterbereich 6 unterhalb des Fahrzeuges 1 im Erfassungsbereich 27 des jeweiligen Sensors 26 am Inspektionsfahrzeug 20 liegt, sondern auch derartig, dass das Fahrzeug 1 selbst möglichst großflächig erfasst bzw. abgescannt werden kann, um den Zustand Z des Fahrzeuges 1 selbst ermitteln bzw. prüfen zu können. Der Inspektions-Pfad IP wird dazu ggf. mit einem nicht-linearen Kurs in entsprechender Weise festgelegt und abgefahren. Daher werden auch Sensor-Signale S2 erzeugt, aus denen sich ein Zustand Z des Fahrzeuges 1 ableiten lässt.

In einem zweiten Teilschritt ST4.2 werden die von dem oder den Sensoren 26 erzeugten Sensor-Signale S2 vorzugsweise unverarbeitet oder nur vorverarbeitet über das drahtlose Kommunikationssystem 4 an das Verwaltungssystem V übertragen. Vorzuweise werden die Sensor-Signale S2 dabei auf dem Inspektionsfahrzeug 20 selbst keiner umfangreichen (Vor-)Verarbeitung unterzogen. Dadurch kann Rechenkapazität und Platz im Inspektionsfahrzeug 20 gespart werden.

In einem dritten Teilschritt ST4.3 wird über einen Erkennungs-Algorithmus EA im Verwaltungssystem V anhand der im Inspektionsfahrzeug 20 erzeugten Sensor-Signale S2 ermittelt, ob sich Personen 30 und/oder Gegenstände 40, z.B. Unterlegkeile 40a, Stützen 40b, Ladung 40c, Nägel 40d, Schrauben 40e, Holzbretter 40f, Paletten 40g, Planen 40h, Rungen 40i, etc. im Unterbereich 6 des Fahrzeuges 1 befinden oder in diesen hineinragen. Wird eine Person 30 und/oder ein Gegenstand 40 im Unterbereich 6 des abfahrbereiten Fahrzeuges 1 erkannt, wird daraus ein Hinderungs-Grund G abgeleitet. Weiterhin kann über den Erkennungs-Algorithmus EA oder einen Teleoperator aus den im Inspektionsfahrzeug 20 erzeugten Sensor-Signalen S2 auch mindestens einer der oben genannten Zustände Z; Z1-Z8 des Fahrzeuges 1 geprüft bzw. abgeleitet werden und daraus, ob ein Hinderungs-Grund G vorliegt. Dabei kann über den Erkennungs-Algorithmus EA oder den Teleoperator beispielsweise die Funktion und die korrekte Einstellung jeder einzelnen Beleuchtung der Beleuchtungsanlage 1f geprüft werden, nachdem oder während diese entsprechend kontrolliert vom Verwaltungssystem V und/oder vom Inspektionsfahrzeug 20 über das Steuer-Signal S1 angesteuert wurde. Auch weitere vom Verwaltungssystem V oder vom Inspektionsfahrzeug 20 veranlasste Funktionsprüfungen und eine entsprechende Überwachung der daraufhin erfolgenden oder ausbleibenden Reaktion des Fahrzeuges 1 über die Sensoren 26 am Inspektionsfahrzeug 20 können vorgesehen sein.

Die Auswertung der Sensor-Signale S2 (optisch Sensoren und/oder akustische Sensoren) kann aber grundsätzlich über den Erkennungs-Algorithmus EA auch im Inspektionsfahrzeug 20 selbst erfolgen, insofern die Infrastruktur im Inspektionsfahrzeug 20 vorhanden ist. Die Teilschritte ST4.2 und ST4.3 sind dann entsprechend angepasst.

Die Auswertung der Sensor-Signale S2 kann zumindest teilweise auch manuell, z.B. über einen Menschen als Teleoperator des Verwaltungssystems V statt über den Erkennungs-Algorithmus EA erfolgen. Dieser kann dann ebenso einen Hinderungs-Grund G anhand der Sensor-Signale S2 feststellen. Der Teleoperator kann das Inspektionsfahrzeug 20 bei Bedarf auch manuell steuern und dazu entsprechende Steuer-Befehle B zur Übertragung an das Inspektionsfahrzeuge 20 vorgegeben.

In einem fünften Schritt ST5 erfolgt in Abhängigkeit des Vorliegens eines Hinderungs-Grundes G eine bzw. keine Freigabe für eine Abfahrt A des jeweiligen Fahrzeuges 1. Wird eine Person 30 und/oder ein Gegenstand 40 durch den Erkennungs-Algorithmus EA (oder den Teleoperator) erkannt bzw. in Abhängigkeit des erfassten Zustandes Z des Fahrzeuges 1 das Vorliegen eines sonstigen Hinderungs-Grundes G festgestellt, erfolgt keine Freigabe für eine Abfahrt A des Fahrzeuges 1 vom jeweiligen Gelände 11a, 11b, d.h. vom Verwaltungssystem V (oder vom Inspektionsfahrzeug 20) wird im Rahmen der Abfahrkontrolle AK kein sicherer Abfahrzustand festgestellt. Dies kann durch eine entsprechende Anwendung der ersten Verwaltungs-Funktion F1 zum Ausdruck kommen. Das Fahrzeug 1 wird also vom Verwaltungssystem V und/oder vom Inspektionsfahrzeug 20 über das drahtlose Kommunikationssystem 4 informativ und/oder durch einen aktiven Eingriff in die Fahrzeug-Steuerung 5 an einer Abfahrt gehindert, beispielsweise durch das Einlegen/Eingelegt lassen der Parkbremse 7 und/oder durch ein Ausschalten des Fahrzeuges 1. Eine Freigabe erfolgt dann beispielsweise erst dann, wenn sich die Person 30 und/oder der Gegenstand 40 nicht mehr im Unterbereich 6 befinden und/oder der jeweils die Abfahrt A verhindernde Zustand Z des Fahrzeuges 1 beseitigt wird.

Die Aufhebung des Hinderungs-Grundes G kann dabei durch eine neue Abfolge des Verfahrens, d.h. durch erneutes Festlegen und Abfahren des Inspektions-Pfades IP und Abscannen des Unterbereiches 6 bzw. des Fahrzeuges 1 am Abstellplatz 10 durch das Inspektionsfahrzeug 20 in den genannten Schritten des Verfahrens, erfolgen oder durch ein manuelles Quittieren des Hinderungs-Grundes G, woraufhin vom Inspektionsfahrzeug 20 weitere Hinderungs-Gründe G geprüft werden können.

Wird im fünften Schritt ST5 festgestellt, dass kein Hinderungs-Grund G vorliegt und/oder dieser aufgehoben wurde, erfolgt die Freigabe und das Fahrzeug 1 wird darüber informiert bzw. wird durch die erste Verwaltungs-Funktion F1 nicht mehr an einer Abfahrt A vom Abstellplatz 10 auf dem jeweiligen Gelände 11a, 11b gehindert. Dies kann beispielsweise dadurch erfolgen, dass das Inspektionsfahrzeug 20 bei Nichtvorliegen eines Hinderungs-Grundes G in einen Freigabebereich 50 fährt, z.B. vor (in Start-Fahrtrichtung) das Fahrzeug 1. Das Fahrzeug 1 erfasst mittels der Fahrzeug-Umfeldsensorik 1c das Inspektionsfahrzeug 20 in diesem Freigabebereich 50 und kann daraus automatisch darauf schließen, dass es seine Fahrt beginnen kann. Weist das Inspektionsfahrzeug 20 einen Sensor 26 an seiner Rückseite 20a auf, kann zudem ausgeschlossen werden, dass sich nach der beschriebenen Abfahrtkontrolle AK bzw. der Freigabe etwas in den "blind spot" (nicht durch die Fahrzeug-Umfeldsensorik 1c erfassbar) vor oder hinter das Fahrzeug 1 geschoben hat. Nach dem Anrollen des abfahrtbereiten Fahrzeugs 1 ist der "blind spot" überwunden und das Inspektionsfahrzeug 20 kann das nächste Fahrzeug 1 prüfen bzw. dem Inspektions-Pfad **IP** zurück zur Parkposition des Inspektionsfahrzeuges 20 folgen.

Wenn ein Energiespeicher 65 des Inspektionsfahrzeugs 20, das dem Betrieb des Inspektionsfahrzeuges 20 dient, leer ist und/oder ein Ladezustand L einen vorgegebenen Grenzladezustand LG unterschreitet, ist dieses ausgebildet, selbstständig in eine auf dem jeweiligen Gelände 11a, 11b installierte Ladestation 66 zu fahren. Dies kann beispielsweise im oder nach dem fünften Schritt ST5 geprüft werden, d.h. nach jeder Inspektion. Falls vom Verwaltungssystem V festgestellt wird, dass in der nächsten Zeit keine Inspektion an einem der Fahrzeuge 1 ansteht, kann das Inspektionsfahrzeuge 20 auch bereits bei einem Grenzladezustand LG von beispielsweise unter 50% die Ladestation 66 angefahren werden, um den Energiespeicher 65 selbständig zu laden.

Die vorgeschlagene Lösung dient dabei vorrangig nicht nur der Zustandskontrolle, d.h. dem Auswerten eines Zustandes Z des Unterbodens oder der Auspuffanlage oder sonstiger Bauteile des Fahrzeuges 1, um einen Defekt oder eine Funktionsunfähigkeit oder eine Funktionsbeeinträchtigung am Fahrzeug 1 festzustellen. Vielmehr soll durch das erfindungsgemäße Verfahren im Rahmen einer Abfahrtkontrolle AK aktiv ausgewertet werden, ob eine sichere Abfahrt A des Fahrzeuges 1 durch eine Person 30 und/oder einen Gegenstand 40 und/oder durch einen bestimmten Zustand Z des Fahrzeuges 1 verhindert ist, wobei dies insbesondere bei einem autonom betriebenen Fahrzeug 1 nicht auf andere Weise aus dem bzw. von dem Fahrzeug 1 selbst aus sicher festgestellt werden kann.

Ergänzend kann vorgesehen sein, dass durch Auswertung der Sensor-Signale S2 des Sensorsystems 25 eine Bauart R der Fahrzeug-Bremsanlage 1d ermittelt wird. Dadurch kann mittels des Sensorsystems 25 am Inspektionsfahrzeug 20 erkannt werden, ob eine elektronische Bremsanlage 1e, z.B. ein ABS/EBS-System, als Bestandteil des Fahrzeug-Bremssystems 1d am Anhänger 1b verbaut ist. Diese Information kann das Verwaltungssystem V dann beispielsweise an das Zugfahrzeug 1a übermitteln, so dass dieses in Kenntnis darüber gesetzt wird und den Anhänger 1b entsprechend ansteuern kann.

### Bezugszeichenliste (Teil der Beschreibung)

- 1: Fahrzeug
- 1a: Zugfahrzeug
- 1b: Anhänger
- 1c: Fahrzeug-Umfeldsensorik
- 1d: Fahrzeug-Bremsanlage
- 1e: elektronische Bremsanlage
- 1f: Beleuchtungsanlage
- 4: drahtloses Kommunikationssystem
- 5: Fahrzeug-Steuerung
- 6: Unterbereich unterhalb des Fahrzeuges 1
- 7: Parkbremse des Fahrzeuges 1
- 8: Räder des Fahrzeuges 1
- 10: Abstellplatz
- 11a: öffentliches Gelände
- 11b: geschlossenes Gelände
- 11c: Gelände-Umfeldsensorik
- 12: Einflussbereich
- 20: Inspektionsfahrzeug
- 20a: Rückseite des Inspektionsfahrzeuges 20
- 20b: Vorderseite des Inspektionsfahrzeuges 20
- 21: Antriebssystem des Inspektionsfahrzeuges 20
- 22: Lenksystem des Inspektionsfahrzeuges 20
- 23: Bremssystem des Inspektionsfahrzeuges 20
- 24: Zentralsteuerung des Inspektionsfahrzeuges 20
- 25: Sensorsystem
- 26: Sensor
- 26a: erster Sensor
- 26b: zweiter Sensor
- 27: Erfassungsbereich
- 28: Kamera
- 28a: Fisheye-Kamera
- 29: Positionserfassungssystem
- 29a: GPS-Sensor
- 29b: LIDAR-Sensor
- 30: Personen
- 40: Gegenstand
- 40a: Unterlegkeil
- 40b: Stütze des Anhängers 1b
- 40c: Ladung
- 40d: Nägel
- 40e: Schrauben
- 40f: Holzbretter
- 40g: Paletten
- 40h: Planen
- 40i: Rungen
- 50: Freigabebereich
- 60: Beleuchtungseinrichtung
- 65: Energiespeicher
- 66: Ladestation
- 68: akustischer Sensor
- 80: Verwaltungs-Steuerung
- 100: Inspektions-System
- A: Abfahrt
- AK: Abfahrtkontrolle
- B: Steuer-Befehl
- EA: Erkennungs-Algorithmus
- F: Verwaltungs-Funktionen
- F1: erste Verwaltungs-Funktion
- F2: zweite Verwaltungs-Funktion
- G: Hinderungs-Grund
- H: Bauhöhe des Inspektionsfahrzeuges 20
- IP: Inspektions-Pfad
- K: Kartendaten
- KF: Kartierungsfunktion
- L: Ladezustand
- LG: Grenzladezustand
- M: Masse des Inspektionsfahrzeuges 20
- N: Geräusch
- P1: Abstell-Position
- P20: aktuelle Position des Inspektionsfahrzeuges 20
- R: Bauart der Fahrzeug-Bremsanlage 1d
- S: Schlangenlinien
- S1: Steuer-Signal
- S2: Sensor-Signal
- tA: Abfahrtszeit
- U: Umgebung
- V: Verwaltungssystem
- vl: Inspektions-Geschwindigkeit
- vMax: Maximal-Geschwindigkeit
- Z: Zustand
- Z1: Beleuchtungszustand
- Z2: Radzustand
- Z3: Türzustand
- Z4: Planenzustand
- Z5: Beladungszustand
- Z6: Witterungszustand
- Z7: Bremsanlagen-Zustand
- Z8: Antriebszustand

- ST1, ST2, ST3, ST4.1, ST4.2, ST4.3, ST5: Schritte des Verfahrens

## Patentansprüche

1. Verfahren zum Inspizieren eines Fahrzeuges (1) auf einem Gelände (11a, 11b) mit einem Verwaltungssystem (V), wobei das Verwaltungssystem (V) ausgebildet ist, Fahrzeuge (1) auf dem Gelände (11a, 11b) mittels mindestens einer Verwaltungs-Funktion (F) zu koordinieren, wobei das Verwaltungssystem (V) ferner ausgebildet ist, ein Inspektionsfahrzeug (20) zu steuern, wobei das Inspektionsfahrzeug (20) ein Sensorsystem (25) mit mindestens einem Sensor (26) aufweist zum Ausgeben von Sensor-Signalen (S2) in Abhängigkeit einer von dem mindestens einen Sensor (26) erfassten Umgebung (U), mit mindestens den folgenden Schritten:
- Ermitteln, ob mindestens ein Fahrzeug (1) auf dem Gelände (11a, 11b) eine Abfahrt (A) von einem Abstellplatz (10) beabsichtigt (ST1);
- Erzeugen mindestens eines Steuer-Befehls (B) durch das Verwaltungssystem (V) und Übertragen des mindestens einen Steuer-Befehls (B) an das Inspektionsfahrzeug (20) derartig, dass sich das Inspektionsfahrzeug (20) entlang eines Inspektions-Pfades (IP) zu dem Abstellplatz (10) des Fahrzeuges (1), das eine Abfahrt (A) beabsichtigt, hin bewegt (ST2, ST3);
- Erfassen einer Umgebung (U) um das Inspektionsfahrzeug (20) am Abstellplatz (10) des Fahrzeuges (1) durch das Sensorsystem (25) im Inspektionsfahrzeug (20) während ein Erfassungsbereich (27) des mindestens einen Sensors (26) zumindest bereichsweise auf den Unterbereich (6) unterhalb des Fahrzeuges (1) und/oder auf das Fahrzeug (1) ausgerichtet ist (ST4.1); und
- Ermitteln in Abhängigkeit der von dem Sensorsystem (25) erzeugten Sensor-Signale (S2), ob ein Hinderungs-Grund (G) vorliegt, durch den die Abfahrt (A) des Fahrzeuges (1) behindert wird zur Durchführung einer Abfahrtkontrolle (AK) (ST5).

2. Verfahren nach Anspruch 1, **dadurch gekennzeichnet, dass** die von dem Sensorsystem (25) des Inspektionsfahrzeuges (20) erzeugten und die Umgebung (U) um das Inspektionsfahrzeug (20) am Abstellplatz (10) charakterisierenden Sensor-Signale (S2) an das Verwaltungssystem (V) übertragen werden, vorzugsweise über ein drahtloses Kommunikationssystem (4), und in dem Verwaltungssystem (V) in Abhängigkeit der von dem Sensorsystem (25) erzeugten Sensor-Signale (S2) ermittelt wird, ob ein Hinderungs-Grund (G) vorliegt, durch den die Abfahrt (A) des Fahrzeuges (1) behindert wird.

3. Verfahren nach Anspruch 2, **dadurch gekennzeichnet, dass** das Ermitteln, ob ein Hinderungs-Grund (G) vorliegt, durch den die Abfahrt (A) des Fahrzeuges (1) behindert wird, in dem Verwaltungssystem (V) manuell oder automatisiert durch einen Erkennungs-Algorithmus (EA) erfolgt.

4. Verfahren nach einem der vorhergehenden Ansprüche, **dadurch gekennzeichnet, dass** der Inspektions-Pfad (IP) durch das Verwaltungssystem (V) vorab festgelegt wird und
- der Inspektions-Pfad (IP) als Steuer-Befehl (B) auf das Inspektionsfahrzeug (20) übertragen wird, oder
- Steuer-Befehle (B) derartig an das Inspektionsfahrzeug (20) übertragen werden, dass das Inspektionsfahrzeug (20) den vorab festgelegten Inspektions-Pfad (IP) abfährt.

5. Verfahren nach Anspruch 4, **dadurch gekennzeichnet, dass** der Inspektions-Pfad (IP) von dem Verwaltungssystem (V) angepasst werden kann, insbesondere in Abhängigkeit der Sensor-Signale (S2).

6. Verfahren nach Anspruch 4 oder 5, **dadurch gekennzeichnet, dass** der Inspektions-Pfad (IP) des Inspektionsfahrzeuges (20) in Abhängigkeit davon festgelegt wird, ob ein oder mehrere Fahrzeuge (1) auf dem Gelände (11a, 11b) eine Abfahrt (A) von einem Abstellplatz (10) beabsichtigen, so dass sich das Inspektionsfahrzeug (20) entlang des Inspektions-Pfades (IP) nacheinander zu den Abstellplätzen (10) aller Fahrzeuge (1), die eine Abfahrt (A) beabsichtigen, hin bewegt, wobei der Inspektions-Pfad (IP) vorzugsweise auch in Abhängigkeit einer geplanten Abfahrtszeit (tA) des jeweiligen Fahrzeuges (1) festgelegt wird.

7. Verfahren nach einem der vorhergehenden Ansprüche, **dadurch gekennzeichnet, dass** das Inspektionsfahrzeug (20) eine Zentralsteuerung (24) aufweist, die in Abhängigkeit des mindestens einen Steuer-Befehls (B) ein Antriebssystem (21) und/oder ein Lenksystem (22) des Inspektionsfahrzeuges (20) automatisiert ansteuert.

8. Verfahren nach Anspruch 7, **dadurch gekennzeichnet, dass** die Zentralsteuerung (24) das Antriebssystem (21) und/oder das Lenksystem (22) des Inspektionsfahrzeuges (20) auch in Abhängigkeit der von dem Sensorsystem (25) des Inspektionsfahrzeuges (20) erzeugten Sensor-Signale (S2) ansteuert, insbesondere eine Inspektionsgeschwindigkeit (vI) des Inspektionsfahrzeuges (20) und/oder den Inspektions-Pfad (IP) in Abhängigkeit der Sensor-Signale (S2) anpasst.

9. Verfahren nach Anspruch 8, **dadurch gekennzeichnet, dass** die Inspektionsgeschwindigkeit (vI) des Inspektionsfahrzeuges (20) auf eine Maximalgeschwindigkeit (vMax) begrenzt wird, wobei die Maximal-Geschwindigkeit (vMax) beispielsweise 20km/h, vorzugsweise 17km/h, insbesondere 14km/h, beträgt und/oder vorzugsweise in Abhängigkeit der Umgebung (U) festgelegt wird.

10. Verfahren nach einem der vorhergehenden Ansprüche, **dadurch gekennzeichnet, dass** der mindestens eine Steuer-Befehl (B) derartig erzeugt wird, dass das Inspektionsfahrzeug (20) am Abstellplatz (10) des Fahrzeuges (1) einen nicht-linearen Kurs, beispielsweise Schlangenlinien (S) fährt.

11. Verfahren nach einem der vorhergehenden Ansprüche, **dadurch gekennzeichnet, dass** der mindestens eine Steuer-Befehl (B) derartig erzeugt wird, dass das Inspektionsfahrzeug (20) in einen Unterbereich (6) unterhalb des Fahrzeuges (1) ragt und/oder den Unterbereich (6) unterhalb des Fahrzeuges (1) komplett durchfährt, um den Erfassungsbereich (27) des mindestens einen Sensors (26) auf den Unterbereich (6) unterhalb des Fahrzeuges (1) auszurichten.

12. Verfahren nach Anspruch 11, **dadurch gekennzeichnet, dass** der mindestens eine Steuer-Befehl (B) derartig erzeugt wird, dass der gesamte Unterbereich (6) unterhalb des Fahrzeuges (1) von den Sensoren (26) des Sensorsystems (25) erfasst werden kann.

13. Verfahren nach Anspruch 11 oder 12, **dadurch gekennzeichnet, dass** ein Hinderungs-Grund (G), durch den die Abfahrt (A) des Fahrzeuges (1) behindert wird, vorliegt, wenn anhand der von dem Sensorsystem (25) des Inspektionsfahrzeuges (20) erzeugten Sensor-Signale (S2) ermittelt wird, dass sich im Unterbereich (6) des Fahrzeuges (1) eine Person (30) und/oder mindestens ein Gegenstand (40) befindet, der ausgewählt ist aus der Gruppe bestehend aus: Unterlegkeil (40a) unter den Rädern (8) des Fahrzeuges (1), Stützen (40b) eines Anhängers (1b) des Fahrzeuges (1), eine Ladung (40c), Nägel (40d), Schrauben (40e), Holzbretter (40f), Paletten (40g), Planen (40h), Rungen (40i).

14. Verfahren nach einem der vorhergehenden Ansprüche, **dadurch gekennzeichnet, dass** ein Hinderungs-Grund (G), durch den die Abfahrt (A) des Fahrzeuges (1) behindert wird, in Abhängigkeit mindestens eines Zustands (Z) ermittelt wird, der ausgewählt ist aus der Gruppe bestehend aus: Beleuchtungszustand (Z1), Radzustand (Z2), Türzustand (Z3), Planenzustand (Z4), Beladungszustand (Z5), Witterungszustand (Z6), Bremsanlagen-Zustand (Z7), Antriebszustand (Z8), wobei der jeweilige Zustand (Z) anhand der von dem Sensorsystem (25) des Inspektionsfahrzeuges (20) erzeugten Sensor-Signale (S2) ermittelt wird.

15. Verfahren nach Anspruch 14, **dadurch gekennzeichnet, dass** der Zustand (Z) des Fahrzeuges (1) über einen akustischen Sensor (68) des Sensorsystems (25) des Inspektionsfahrzeuges (20) ermittelt wird durch Auswertung der in der Umgebung (U) um das Inspektionsfahrzeug (20) auftretenden Geräusche (N), die über den akustischen Sensor (68) an dem Abstellplatz (10) des Fahrzeuges (1) erfasst werden.

16. Verfahren nach einem der vorhergehenden Ansprüche, **dadurch gekennzeichnet, dass** das Verwaltungssystem (V) und/oder das Inspektionsfahrzeug (20) bei Vorliegen eines Hinderungs-Grundes (G), durch den die Abfahrt (A) des Fahrzeuges (1) behindert wird, Steuer-Signale (S1) derartig erzeugt und an das Fahrzeug (1) ausgibt, dass das Fahrzeug (1) an einer Abfahrt (A) gehindert wird und/oder darauf hingewiesen wird, dass ein Hinderungs-Grund (G) vorliegt, durch den die Abfahrt (A) des Fahrzeuges (1) behindert wird.

17. Verfahren nach Anspruch 16, **dadurch gekennzeichnet, dass** aufgrund der Steuer-Signale (S1) bei Vorliegen eines Hinderungs-Grundes (G) eine Parkbremse (7) des Fahrzeuges (1) eingelegt wird oder eingelegt bleibt und/oder das Fahrzeug (1) ausgeschaltet wird.

18. Verfahren nach einem der vorhergehenden Ansprüche, **dadurch gekennzeichnet, dass** sich das Inspektionsfahrzeug (20) bei Nichtvorliegen eines Hinderungs-Grundes (G) in einen Freigabebereich (50) auf dem Gelände (11a, 11b) bewegt, wobei das Fahrzeug (1) mittels einer Fahrzeug-Umfeldsensorik (1c) erfasst, ob sich das Inspektionsfahrzeug (20) in dem Freigabebereich (50) befindet und dadurch ermittelt, ob eine Abfahrt (A) des Fahrzeuges (1) vom Verwaltungssystem (V) freigegeben ist, wobei in Abhängigkeit der vom Inspektionsfahrzeug (20) erzeugten Sensor-Signale (S2) bis zu einer Abfahrt (A) und/oder bei einer Abfahrt (A) des Fahrzeuges (1) vom Abstellplatz (10) weiterhin das Vorliegen eines Hinderungs-Grundes (G) geprüft wird.

19. Verfahren nach einem der vorhergehenden Ansprüche, **dadurch gekennzeichnet, dass** sich das Inspektionsfahrzeug (20) bei Unterschreiten eines Grenzladezustandes (LG) eines Energiespeichers (65) des Inspektionsfahrzeuges (20) selbständig und oder vom Verwaltungssystem (V) veranlasst in eine auf dem jeweiligen Gelände (11a, 11b) installierte Ladestation (66) fährt.

20. Verfahren nach einem der vorhergehenden Ansprüche, **dadurch gekennzeichnet, dass** in Abhängigkeit der Sensor-Signale (S2) des Sensorsystems (25) des Inspektionsfahrzeuges (20) eine Bauart (R) der Fahrzeug-Bremsanlage (1d) des Fahrzeuges (1), insbesondere eines Anhängers (1b) des Fahrzeuges (1), ermittelt wird.

21. Verfahren nach einem der vorhergehenden Ansprüche, **dadurch gekennzeichnet, dass** das Inspektionsfahrzeug (20) dem Gelände (11a, 11b) des Verwaltungssystems (V) zugeordnet ist und/oder sich das Inspektionsfahrzeug (20) nur auf dem Gelände (11a, 11b) des Verwaltungssystems (V) bewegen kann.

22. Verfahren nach einem der vorhergehenden Ansprüche, **dadurch gekennzeichnet, dass** eine aktuelle Position (P20) des Inspektionsfahrzeuges (20) vom Verwaltungssystem (V) beim Abfahren des Inspektions-Pfades (IP) durch ein Positionserfassungssystem (29) am Inspektionsfahrzeug (20) überwacht wird.

23. Verfahren nach Anspruch 22, **dadurch gekennzeichnet, dass** beim Abfahren des Inspektions-Pfades (IP) durch das Inspektionsfahrzeug (20) eine Kartierungsfunktion (KF) durchgeführt wird, bei der auf dem Verwaltungssystem (V) gespeicherte Kartendaten (K) in Abhängigkeit der aktuellen Position (P20) sowie der vom Sensorsystem (25) im Inspektionsfahrzeug (20) erzeugten Sensor-Signale (S2) validiert und/oder geprüft werden.

24. Inspektions-Anordnung (100) aus einem Verwaltungssystem (V) und einem von dem Verwaltungssystem (V) steuerbaren Inspektionsfahrzeug (20), wobei das Verwaltungssystem (V) eine Verwaltungs-Steuerung (80) aufweist, die ausgebildet ist, Fahrzeuge (1) auf einem Gelände (11a, 11b) mittels mindestens einer Verwaltungs-Funktion (F) zu koordinieren, wobei das Inspektionsfahrzeug (20) ein Sensorsystem (25) mit mindestens einem Sensor (26) aufweist zum Ausgeben von Sensor-Signalen (S2) in Abhängigkeit einer von dem mindestens einen Sensor (26) erfassten Umgebung (U), wobei die Verwaltungs-Steuerung (80) ferner ausgebildet ist,
- zu ermitteln, ob mindestens ein Fahrzeug (1) auf dem Gelände (11a, 11b) eine Abfahrt (A) von einem Abstellplatz (10) beabsichtigt;
- mindestens einen Steuer-Befehl (B) derartig zu erzeugen und den mindestens einen Steuer-Befehl (B) an das Inspektionsfahrzeug (20) derartig zu übertragen, dass sich das Inspektionsfahrzeug (20) entlang eines Inspektions-Pfades (IP) zu dem Abstellplatz (10) des Fahrzeuges (1), das eine Abfahrt (A) beabsichtigt, hin bewegt, so dass das Sensorsystem (25) im Inspektionsfahrzeug (20) eine Umgebung (U) um das Inspektionsfahrzeug (20) erfassen kann, während ein Erfassungsbereich (27) des mindestens einen Sensors (26) zumindest bereichsweise auf den Unterbereich (6) unterhalb des Fahrzeuges (1) und/oder auf das Fahrzeug (1) ausgerichtet ist; und
- in Abhängigkeit der von dem Sensorsystem (25) des Inspektionsfahrzeuges (20) erzeugten Sensor-Signale (S2) zu ermitteln, ob ein Hinderungs-Grund (G) vorliegt, durch den die Abfahrt (A) des Fahrzeuges (1) behindert ist zur Durchführung einer Abfahrtkontrolle (AK).

25. Inspektions-Anordnung (100) nach Anspruch 24, **dadurch gekennzeichnet, dass** eine Beleuchtungseinrichtung (60) an einer Rückseite (20a) und/oder an einer Vorderseite (20b) des Inspektionsfahrzeugs (20) angeordnet ist zum Beleuchten der Umgebung (U) des Inspektionsfahrzeuges (20).

26. Inspektions-Anordnung (100) nach Anspruch 24 oder 25, **dadurch gekennzeichnet, dass** der mindestens eine Sensor (26) des Sensorsystems (25) eine Fisheye-Kamera (28a) ist, wobei vorzugsweise mindestens zwei Sensoren (26) vorgesehen sind, die unterschiedliche, vorzugsweise gegensätzlich ausgerichtete, Erfassungsbereiche (27) aufweisen, und/oder der mindestens eine Sensor (26) ein akustischer Sensor (68) ist zur Aufnahme von Geräuschen (N) im Erfassungsbereich (27).

27. Inspektions-Anordnung (100) nach einem der Ansprüche 24 bis 26, **dadurch gekennzeichnet, dass** eine Bauhöhe (H) des Inspektionsfahrzeuges (20) maximal 0,5m, insbesondere maximal 0,35m beträgt, und/oder eine Masse (M) des Inspektionsfahrzeuges (20) geringer als 10kg, vorzugsweise geringer als 5kg ist.

## Claims

1. Method for inspecting a vehicle (1) on a site (11a, 11b) by using a management system (V), wherein the management system (V) is designed to coordinate vehicles (1) on the site (11a, 11b) by means of at least one management function (F), wherein the management system (V) is further designed to control an inspection vehicle (20), wherein the inspection vehicle (20) has a sensor system (25) comprising at least one sensor (26) for outputting sensor signals (S2) depending on surroundings (U) detected by the at least one sensor (26), the method comprising at least the following steps:
- determining whether at least one vehicle (1) on the site (11a, 11b) intends to depart (A) from a parking space (10) (ST1);
- generating at least one control command (B) by the management system (V) and transmitting the at least one control command (B) to the inspection vehicle (20) such that the inspection vehicle (20) moves along an inspection path (IP) towards the parking space (10) of the vehicle (1) intending to depart (A) (ST2, ST3);
- detecting surroundings (U) of the inspection vehicle (20) at the parking space (10) of the vehicle (1) by the sensor system (25) in the inspection vehicle (20) while a detection region (27) of the at least one sensor (26) is at least partially aligned with the sub-region (6) beneath the vehicle (1) and/or with the vehicle (1) (ST4.1); and
- determining, depending on the sensor signals (S2) generated by the sensor system (25), whether there is an obstacle (G) preventing the departure (A) of the vehicle (1), in order to carry out a departure check (AK) (ST5).

2. Method according to claim 1, **characterized in that** the sensor signals (S2) generated by the sensor system (25) of the inspection vehicle (20) and characterizing the surroundings (U) of the inspection vehicle (20) at the parking space (10) are transmitted to the management system (V), preferably via a wireless communication system (4), and in the management system (V) it is determined, depending on the sensor signals (S2) generated by the sensor system (25), whether there is an obstacle (G) preventing the departure (A) of the vehicle (1).

3. Method according to claim 2, **characterized in that** determining whether there is an obstacle (G) preventing the departure (A) of the vehicle (1) is carried out manually or in an automated manner in the management system (V) by means of a recognition algorithm (EA).

4. Method according to any of the preceding claims, **characterized in that** the inspection path (IP) is predefined by the management system (V) and
- the inspection path (IP) is transmitted to the inspection vehicle (20) as a control command (B), or
- control commands (B) are transmitted to the inspection vehicle (20) such that the inspection vehicle (20) travels along the predefined inspection path (IP).

5. Method according to claim 4, **characterized in that** the inspection path (IP) can be adjusted by the management system (V), in particular depending on the sensor signals (S2).

6. Method according to claim 4 or claim 5, **characterized in that** the inspection path (IP) of the inspection vehicle (20) is defined depending on whether one or more vehicles (1) on the site (11a, 11b) intend to depart (A) from a parking space (10), so that the inspection vehicle (20) moves along the inspection path (IP) to the parking spaces (10), one after the other, of all vehicles (1) intending to depart (A), the inspection path (IP) preferably also being defined depending on a planned departure time (tA) of the relevant vehicle (1).

7. Method according to any of the preceding claims, **characterized in that** the inspection vehicle (20) has a central controller (24) which controls a drive system (21) and/or a steering system (22) of the inspection vehicle (20) in an automated manner depending on the at least one control command (B).

8. Method according to claim 7, **characterized in that** the central controller (24) controls the drive system (21) and/or the steering system (22) of the inspection vehicle (20) also depending on the sensor signals (S2) generated by the sensor system (25) of the inspection vehicle (20), in particular adjusts an inspection speed (vl) of the inspection vehicle (20) and/or the inspection path (IP) depending on the sensor signals (S2).

9. Method according to claim 8, **characterized in that** the inspection speed (vl) of the inspection vehicle (20) is limited to a maximum speed (vMax), the maximum speed (vMax) being, for example, 20 km/h, preferably 17 km/h, in particular 14 km/h, and/or preferably being defined depending on the surroundings (U).

10. Method according to any of the preceding claims, **characterized in that** the at least one control command (B) is generated such that the inspection vehicle (20) travels a non-linear course, for example serpentine lines (S), at the parking space (10) of the vehicle (1).

11. Method according to any of the preceding claims, **characterized in that** the at least one control command (B) is generated such that the inspection vehicle (20) projects into a sub-region (6) beneath the vehicle (1) and/or completely passes through the sub-region (6) beneath the vehicle (1) in order to align the detection region (27) of the at least one sensor (26) with the sub-region (6) beneath the vehicle (1).

12. Method according to claim 11, **characterized in that** the at least one control command (B) is generated such that the entire sub-region (6) beneath the vehicle (1) can be detected by the sensors (26) of the sensor system (25).

13. Method according to claim 11 or claim 12, **characterized in that** there is an obstacle (G) preventing the departure (A) of the vehicle (1) if it is determined on the basis of the sensor signals (S2) generated by the sensor system (25) of the inspection vehicle (20) that there is a person (30) and/or at least one object (40) in the sub-region (6) of the vehicle (1), which object is selected from the group consisting of: wheel chock (40a) under the wheels (8) of the vehicle (1), supports (40b) of a trailer (1b) of the vehicle (1), a load (40c), nails (40d), screws (40e), wooden boards (40f), pallets (40g), tarpaulins (40h), and stanchions (40i).

14. Method according to any of the preceding claims, **characterized in that** an obstacle (G) preventing the departure (A) of the vehicle (1) is determined depending on at least one state (Z), which is selected from the group consisting of: illumination state (Z1), wheel state (Z2), door state (Z3), tarpaulin state (Z4), loading state (Z5), weather state (Z6), braking system state (Z7), and drive state (Z8), the relevant state (Z) being determined on the basis of the sensor signals (S2) generated by the sensor system (25) of the inspection vehicle (20).

15. Method according to claim 14, **characterized in that** the state (Z) of the vehicle (1) is determined via an acoustic sensor (68) of the sensor system (25) of the inspection vehicle (20) by evaluating the noises (N) occurring in the surroundings (U) of the inspection vehicle (20), which noises are detected by the acoustic sensor (68) at the parking space (10) of the vehicle (1).

16. Method according to any of the preceding claims, **characterized in that** if there is an obstacle (G) preventing the departure (A) of the vehicle (1), the management system (V) and/or the inspection vehicle (20) generates and outputs control signals (S1) to the vehicle (1) such that the vehicle (1) is prevented from departing (A) and/or it is indicated that there is an obstacle (G) preventing the departure (A) of the vehicle (1).

17. Method according to claim 16, **characterized in that** based on the control signals (S1), if there is an obstacle (G), a parking brake (7) of the vehicle (1) is engaged or remains engaged and/or the vehicle (1) is switched off.

18. Method according to any of the preceding claims, **characterized in that** the inspection vehicle (20) moves into an authorization region (50) on the site (11a, 11b) if there is no obstacle (G), the vehicle (1) detecting by means of a vehicle surroundings sensor system (1c) whether the inspection vehicle (20) is in the authorization region (50) and thereby determining whether a departure (A) of the vehicle (1) is authorized by the management system (V), it also being checked whether there is an obstacle (G) depending on the sensor signals (S2) generated by the inspection vehicle (20) up to a departure (A) and/or when the vehicle (1) departs (A) from the parking space (10).

19. Method according to any of the preceding claims, **characterized in that** when the charge level of an energy store (65) of the inspection vehicle (20) falls below a limit charging state (LG), the inspection vehicle (20) travels, automatically and/or at the request of the management system (V), to a charging station (66) installed on the relevant site (11a, 11b).

20. Method according to any of the preceding claims, **characterized in that** depending on the sensor signals (S2) of the sensor system (25) of the inspection vehicle (20), a design (R) of the vehicle braking system (1d) of the vehicle (1), in particular of a trailer (1b) of the vehicle (1), is determined.

21. Method according to any of the preceding claims, **characterized in that** the inspection vehicle (20) is assigned to the site (11a, 11b) of the management system (V) and/or the inspection vehicle (20) can only move on the site (11a, 11b) of the management system (V).

22. Method according to any of the preceding claims, **characterized in that** a current position (P20) of the inspection vehicle (20) is monitored by the management system (V), when traveling along the inspection path (IP), via a position detection system (29) on the inspection vehicle (20).

23. Method according to claim 22, **characterized in that** when the inspection vehicle (20) travels along the inspection path (IP), a mapping function (KF) is carried out in which map data (K) stored on the management system (V) are validated and/or checked depending on the current position (P20) and on the sensor signals (S2) generated by the sensor system (25) in the inspection vehicle (20).

24. Inspection arrangement (100) consisting of a management system (V) and an inspection vehicle (20) controllable by the management system (V), wherein the management system (V) has a management controller (80) which is designed to coordinate vehicles (1) on a site (11a, 11b) by means of at least one management function (F), wherein the inspection vehicle (20) has a sensor system (25) comprising at least one sensor (26) for outputting sensor signals (S2) depending on surroundings (U) detected by the at least one sensor (26), wherein the management controller (80) is further designed:
- to determine whether at least one vehicle (1) on the site (11a, 11b) intends to depart (A) from a parking space (10);
- to generate at least one control command (B) and to transmit the at least one control command (B) to the inspection vehicle (20) in such a way that the inspection vehicle (20) moves along an inspection path (IP) towards the parking space (10) of the vehicle (1) intending to depart (A), so that the sensor system (25) in the inspection vehicle (20) can detect surroundings (U) of the inspection vehicle (20), while a detection region (27) of the at least one sensor (26) is at least partially aligned with the sub-region (6) beneath the vehicle (1) and/or with the vehicle (1); and
- to determine, depending on the sensor signals (S2) generated by the sensor system (25) of the inspection vehicle (20), whether there is an obstacle (G) preventing the departure (A) of the vehicle (1), in order to carry out a departure check (AK).

25. Inspection arrangement (100) according to claim 24,
**characterized in that** an illumination device (60) is arranged on a rear side (20a) and/or on a front side (20b) of the inspection vehicle (20) for illuminating the surroundings (U) of the inspection vehicle (20).

26. Inspection arrangement (100) according to claim 24 or claim 25,
**characterized in that** the at least one sensor (26) of the sensor system (25) is a fisheye camera (28a), at least two sensors (26) preferably being provided which have different, preferably oppositely aligned, detection regions (27), and/or the at least one sensor (26) is an acoustic sensor (68) for recording noises (N) in the detection region (27).

27. Inspection arrangement (100) according to any of claims 24 to 26,
**characterized in that** an overall height (H) of the inspection vehicle (20) is a maximum of 0.5 m, in particular a maximum of 0.35 m, and/or a mass (M) of the inspection vehicle (20) is less than 10 kg, preferably less than 5 kg.

## Revendications

1. Procédé permettant l'inspection d'un véhicule (1) sur un terrain (11a, 11b) comportant un système de gestion (V), dans lequel le système de gestion (V) est configuré pour coordonner des véhicules (1) sur le terrain (11a, 11b) au moyen d'au moins une fonction de gestion (F), dans lequel le système de gestion (V) est en outre configuré pour commander un véhicule d'inspection (20), dans lequel le véhicule d'inspection (20) présente un système à capteur (25) comportant au moins un capteur (26) pour l'émission de signaux de capteur (S2) en fonction d'un environnement (U) détecté par l'au moins un capteur (26), comportant au moins les étapes suivantes :
- fait de déterminer si au moins un véhicule (1) sur le terrain (11a, 11b) envisage ou non un départ (A) d'une place de stationnement (10) (ST1) ;
- génération d'au moins une instruction de commande (B) par le système de gestion (V) et transmission de l'au moins une instruction de commande (B) au véhicule d'inspection (20) de telle sorte que le véhicule d'inspection (20) se déplace le long d'un chemin d'inspection (IP) vers la place de stationnement (10) du véhicule (1) qui envisage un départ (A) (ST2, ST3) ;
- détection d'un environnement (U) autour du véhicule d'inspection (20) au niveau de la place de stationnement (10) du véhicule (1) par le système à capteur (25) dans le véhicule d'inspection (20) pendant qu'une zone de détection (27) de l'au moins un capteur (26) est orientée au moins dans certaines zones vers la zone inférieure (6) en dessous du véhicule (1) et/ou vers le véhicule (1) (ST4.1) ; et
- fait de déterminer, en fonction des signaux de capteur (S2) générés par le système à capteur (25), si un motif d'entrave (G) entravant le départ (A) du véhicule (1) existe ou non pour l'exécution d'un contrôle de départ (AK) (ST5).

2. Procédé selon la revendication 1, **caractérisé en ce que** les signaux de capteur (S2) générés par le système à capteur (25) du véhicule d'inspection (20) et caractérisant l'environnement (U) autour du véhicule d'inspection (20) au niveau de la place de stationnement (10) sont transmis au système de gestion (V), de préférence par l'intermédiaire d'un système de communication sans fil (4) et, dans le système de gestion (V), en fonction des signaux de capteur (S2) générés par le système à capteur (25), on détermine s'il existe ou non un motif d'entrave (G) entravant le départ (A) du véhicule (1).

3. Procédé selon la revendication 2, **caractérisé en ce que** le fait de déterminer si un motif d'entrave (G) entravant le départ (A) du véhicule (1) existe ou non est effectué manuellement ou automatiquement dans le système de gestion (V) par un algorithme de reconnaissance (EA).

4. Procédé selon l'une des revendications précédentes,
**caractérisé en ce que** le chemin d'inspection (IP) est préétabli par le système de gestion (V), et
- le chemin d'inspection (IP) est transmis au véhicule d'inspection (20) en tant qu'instruction de commande (B), ou
- des instructions de commande (B) sont transmises au véhicule d'inspection (20) de telle sorte que le véhicule d'inspection (20) part du chemin d'inspection (IP) préétabli.

5. Procédé selon la revendication 4, **caractérisé en ce que** le chemin d'inspection (IP) peut être adapté par le système de gestion (V), en particulier en fonction des signaux de capteur (S2).

6. Procédé selon la revendication 4 ou 5, **caractérisé en ce que** le chemin d'inspection (IP) du véhicule d'inspection (20) est établi en fonction du fait de savoir si un ou plusieurs véhicules (1) sur le terrain (11a, 11b) envisagent ou non un départ (A) d'une place de stationnement (10), de sorte que le véhicule d'inspection (20) se déplace successivement le long du chemin d'inspection (IP) vers les places de stationnement (10) de tous les véhicules (1) qui envisagent un départ (A), dans lequel le chemin d'inspection (IP) est de préférence également établi en fonction d'une heure de départ (tA) planifiée du véhicule (1) respectif.

7. Procédé selon l'une des revendications précédentes,
**caractérisé en ce que** le véhicule d'inspection (20) présente un dispositif de commande central (24) qui commande de manière automatisée un système d'entraînement (21) et/ou un système de direction (22) du véhicule d'inspection (20) en fonction de l'au moins une instruction de commande (B).

8. Procédé selon la revendication 7, **caractérisé en ce que** le dispositif de commande central (24) commande également le système d'entraînement (21) et/ou le système de direction (22) du véhicule d'inspection (20) en fonction des signaux de capteur (S2) générés par le système à capteur (25) du véhicule d'inspection (20), en particulier adapte une vitesse d'inspection (vi) du véhicule d'inspection (20) et/ou le chemin d'inspection (IP) en fonction des signaux de capteur (S2).

9. Procédé selon la revendication 8, **caractérisé en ce que** la vitesse d'inspection (vl) du véhicule d'inspection (20) est limitée à une vitesse maximale (vMax), dans lequel la vitesse maximale (vMax) est par exemple de 20 km/h, de préférence de 17 km/h, en particulier de 14 km/h, et/ou est de préférence établie en fonction de l'environnement (U).

10. Procédé selon l'une des revendications précédentes,
**caractérisé en ce que** l'au moins une instruction de commande (B) est générée de telle sorte que le véhicule d'inspection (20) suit une trajectoire non linéaire, par exemple des lignes sinueuses (S), au niveau de la place de stationnement (10) du véhicule (1).

11. Procédé selon l'une des revendications précédentes,
**caractérisé en ce que** l'au moins une instruction de commande (B) est générée de telle sorte que le véhicule d'inspection (20) pénètre dans une zone inférieure (6) en dessous du véhicule (1) et/ou traverse complètement la zone inférieure (6) en dessous du véhicule (1) afin d'orienter la zone de détection (27) de l'au moins un capteur (26) vers la zone inférieure (6) en dessous du véhicule (1).

12. Procédé selon la revendication 11, **caractérisé en ce que** l'au moins une instruction de commande (B) est générée de telle sorte que toute la zone inférieure (6) en dessous du véhicule (1) peut être détectée par les capteurs (26) du système à capteur (25).

13. Procédé selon la revendication 11 ou 12, **caractérisé en ce qu'un** motif d'entrave (G) entravant le départ (A) du véhicule (1) existe lorsqu'il est déterminé, à l'aide des signaux de capteur (S2) générés par le système à capteur (25) du véhicule d'inspection (20), qu'une personne (30) et/ou au moins un objet (40) se trouvent dans la zone inférieure (6) du véhicule (1), lequel objet est choisi dans le groupe constitué de : sabot d'arrêt (40a) sous les roues (8) du véhicule (1), béquilles (40b) d'une remorque (1b) du véhicule (1), chargement (40c), clous (40d), vis (40e), planches de bois (40f), palettes (40g), bâches (40h), ranchers (40i).

14. Procédé selon l'une des revendications précédentes,
**caractérisé en ce qu'un** motif d'entrave (G) entravant le départ (A) du véhicule (1) est déterminé en fonction d'au moins un état (Z) choisi dans le groupe constitué de : état d'éclairage (Z1), état des roues (Z2), état des portes (Z3), état de la bâche (Z4), état du chargement (Z5), état des conditions météorologiques (Z6), état de l'installation de freinage (Z7), état de l'entraînement (Z8), dans lequel l'état (Z) respectif est déterminé à l'aide des signaux de capteur (S2) générés par le système à capteur (25) du véhicule d'inspection (20).

15. Procédé selon la revendication 14, **caractérisé en ce que** l'état (Z) du véhicule (1) est déterminé par l'intermédiaire d'un capteur acoustique (68) du système à capteur (25) du véhicule d'inspection (20) en évaluant les bruits (N) se produisant dans l'environnement (U) autour du véhicule d'inspection (20), lesquels sont détectés au niveau de la place de stationnement (10) du véhicule (1) par le capteur acoustique (68).

16. Procédé selon l'une des revendications précédentes,
**caractérisé en ce que** le système de gestion (V) et/ou le véhicule d'inspection (20), en présence d'un motif d'entrave (G) entravant le départ (A) du véhicule (1), génèrent et délivrent au véhicule (1) des signaux de commande (S1) de telle sorte qu'un départ (A) du véhicule (1) est entravé et/ou que l'existence d'un motif d'entrave (G) entravant le départ (A) du véhicule (1) est indiquée.

17. Procédé selon la revendication 16, **caractérisé en ce que,** sur la base des signaux de commande (S1), en présence d'un motif d'entrave (G), un frein de stationnement (7) du véhicule (1) est serré ou reste serré et/ou le contact du véhicule (1) est coupé.

18. Procédé selon l'une des revendications précédentes,
**caractérisé en ce que,** en l'absence d'un motif d'entrave (G), le véhicule d'inspection (20) se déplace dans une zone d'autorisation (50) sur le terrain (11a, 11b), dans lequel le véhicule (1) détecte au moyen d'une technologie de capteur d'environnement de véhicule (1c) si le véhicule d'inspection (20) se trouve ou non dans la zone d'autorisation (50) et détermine ainsi si un départ (A) du véhicule (1) est autorisé ou non par le système de gestion (V), dans lequel la présence d'un motif d'entrave (G) continue d'être examinée en fonction des signaux de capteur (S2) générés par le véhicule d'inspection (20) jusqu'à un départ (A) et/ou lors d'un départ (A) du véhicule (1) de la place de stationnement (10).

19. Procédé selon l'une des revendications précédentes,
**caractérisé en ce que** le véhicule d'inspection (20), lorsqu'un état de charge limite (LG) d'un accumulateur d'énergie (65) du véhicule d'inspection (20) n'est pas atteint, se déplace de manière autonome et/ou à l'initiative du système de gestion (V) vers une station de charge (66) installée sur le terrain (11a, 11b) respectif.

20. Procédé selon l'une des revendications précédentes,
**caractérisé en ce que,** en fonction des signaux de capteur (S2) du système à capteur (25) du véhicule d'inspection (20), un type de construction (R) de l'installation de freinage de véhicule (1d) du véhicule (1), en particulier d'une remorque (1b) du véhicule (1), est déterminé.

21. Procédé selon l'une des revendications précédentes,
**caractérisé en ce que** le véhicule d'inspection (20) est associé au terrain (11a, 11b) du système de gestion (V) et/ou le véhicule d'inspection (20) peut uniquement se déplacer sur le terrain (11a, 11b) du système de gestion (V).

22. Procédé selon l'une des revendications précédentes,
**caractérisé en ce qu'**une position actuelle (P20) du véhicule d'inspection (20) est surveillée par le système de gestion (V) lors du départ du chemin d'inspection (IP) par un système de détection de position (29) sur le véhicule d'inspection (20).

23. Procédé selon la revendication 22, **caractérisé en ce que,** lors du départ du chemin d'inspection (IP) par le véhicule d'inspection (20), une fonction de cartographie (KF) est exécutée dans laquelle des données cartographiques (K) enregistrées sur le système de gestion (V) sont validées et/ou examinées en fonction de la position actuelle (P20) ainsi que des signaux de capteur (S2) générés par le système à capteur (25) dans le véhicule d'inspection (20).

24. Agencement d'inspection (100) constitué d'un système de gestion (V) et d'un véhicule d'inspection (20) pouvant être commandé par le système de gestion (V), dans lequel le système de gestion (V) présente un dispositif de commande de gestion (80) configuré pour coordonner des véhicules (1) sur un terrain (11a, 11b) au moyen d'au moins une fonction de gestion (F), dans lequel le véhicule d'inspection (20) présente un système à capteur (25) comportant au moins un capteur (26) pour l'émission de signaux de capteur (S2) en fonction d'un environnement (U) détecté par l'au moins un capteur (26), dans lequel le dispositif de commande de gestion (80) est en outre configuré pour
- déterminer si au moins un véhicule (1) sur le terrain (11a, 11b) envisage ou non un départ (A) d'une place de stationnement (10) ;
- générer au moins une instruction de commande (B) et transmettre l'au moins une instruction de commande (B) au véhicule d'inspection (20) de telle sorte que le véhicule d'inspection (20) se déplace le long d'un chemin d'inspection (IP) vers la place de stationnement (10) du véhicule (1) qui envisage un départ (A), de sorte que le système à capteur (25) dans le véhicule d'inspection (20) peut détecter un environnement (U) autour du véhicule d'inspection (20), tandis qu'une zone de détection (27) de l'au moins un capteur (26) est orientée au moins dans certaines zones vers la zone inférieure (6) en dessous du véhicule (1) et/ou vers le véhicule (1) ; et
- déterminer, en fonction des signaux de capteur (S2) générés par le système à capteur (25) du véhicule d'inspection (20), si un motif d'entrave (G) entravant le départ (A) du véhicule (1) existe ou non pour l'exécution d'un contrôle de départ (AK).

25. Agencement d'inspection (100) selon la revendication 24,
**caractérisé en ce qu'**un appareil d'éclairage (60) est disposé sur une face arrière (20a) et/ou sur une face avant (20b) du véhicule d'inspection (20) pour l'éclairage de l'environnement (U) du véhicule d'inspection (20).

26. Agencement d'inspection (100) selon la revendication 24 ou 25,
**caractérisé en ce que** l'au moins un capteur (26) du système à capteur (25) est une caméra hypergone (28a), dans lequel de préférence au moins deux capteurs (26) sont prévus, lesquels présentent des zones de détection (27) différentes, de préférence orientées de manière opposée, et/ou l'au moins un capteur (26) est un capteur acoustique (68) pour l'enregistrement de bruits (N) dans la zone de détection (27).

27. Agencement d'inspection (100) selon l'une des revendications 24 à 26,
**caractérisé en ce qu'**une hauteur de construction (H) du véhicule d'inspection (20) est au maximum de 0,5 m, en particulier au maximum de 0,35 m, et/ou une masse (M) du véhicule d'inspection (20) est inférieure à 10 kg, de préférence inférieure à 5 kg.
